# EUROPEAN PATENT APPLICATION

(11) **EP 4 845 271 A1**
(43) Date of publication of application: **25.11.2026**
(21) Application number: 25761169.9
(22) Date of filing: 03.03.2025
(51) Int. Cl.: H04W 72/0453

(54) **COMMUNICATION METHOD AND APPARATUS**

(30) Priority: 01.03.2024 CN 202410240144
(71) Applicant: Huawei Technologies Co., Ltd., Shenzhen, Guangdong 518129 (CN)
(72) Inventor: HAN, Xiaojiang, Shenzhen, Guangdong 518129 (CN); SHI, Meng, Shenzhen, Guangdong 518129 (CN); CHEN, Qucai, Shenzhen, Guangdong 518129 (CN); LIAO, Shuri, Shenzhen, Guangdong 518129 (CN); WANG, Ni, Shenzhen, Guangdong 518129 (CN)
(74) Representative: Epping - Hermann - Fischer
(86) International application number: PCT/CN2025/080289
(87) International publication number: WO 2025/180536

(57) **Abstract**

This application relates to the communication field, and specifically, to a communication method and a communication apparatus. The wide coverage area and high moving speed of satellites lead to significant increases in resource overhead, measurement duration, and terminal power consumption for SSB measurement. In conventional technologies, an SSB rolling mapping pattern is used, but mapping rules for a serving satellite and a neighboring satellite are not defined, and consequently, SSB interference may occur at a same beam position. In the method provided in this application, mapping relationships between beam position indexes and SSB indexes differ across satellites, and an offset is introduced between SSB indexes corresponding to different satellites at a same beam position, thereby avoiding SSB interference, enabling accurate SSB measurement, and reducing SSB measurement overhead.

## Description

### TECHNICAL FIELD

This application relates to the communication field, and in particular, to a communication method and apparatus.

### BACKGROUND

A non-terrestrial network (non-terrestrial network, NTN) is a network in which communication is performed based on airborne and spaceborne devices such as satellites, unmanned aircraft systems (unmanned aircraft systems, UASs), or high altitude platform stations (high altitude platform stations, HAPSs). The NTN features wide coverage, low latency, broadband capability, and low costs. As a supplement and extension to terrestrial networks, the NTN can implement wide-area seamless coverage that cannot be achieved by wired telephone networks or terrestrial mobile communication networks, thereby effectively addressing internet access issues in areas with insufficient communication infrastructure.

Compared with terrestrial communication systems, satellite communication systems provide a wider coverage area. To achieve seamless coverage, a quantity of synchronization signal block (synchronization signal block, SSB) beams may reach hundreds or even thousands, and a complete scan may take hundreds of milliseconds. In addition, because low-orbit satellites move at high speeds, terminals must frequently perform handovers among a plurality of satellites. However, excessive SSB beams of satellites significantly prolong the time required for terminals to search for and measure SSBs. In addition, the network side needs to configure a longer measurement window in the SSB measurement timing configuration (SS/PBCH block measurement timing configuration, SMTC). Consequently, the continuous SSB search increases terminal power consumption, and SSB measurement occupies considerable time-frequency resources.

### SUMMARY

This application provides a communication method and apparatus for SSB configuration, so as to mitigate SSB interference from neighboring satellites, enable accurate measurement of SSBs of the neighboring satellites, and reduce SSB measurement overhead.

According to a first aspect, an embodiment of this application provides a communication method. The method may be performed by a network device, may be performed by a component of the network device, for example, a processor, a chip, or a chip system of the network device, or may be implemented by a logical module or software that can implement all or some functions of the network device.

The method provided in the first aspect includes: A fifth device receives a first message sent by a first device, where the fifth device is, for example, a satellite base station, the first device is, for example, a satellite platform, the first message includes a first synchronization signal block (synchronization signal block, SSB) index set and a first parameter, the first SSB index set is a set of indexes of SSB beams covering earth beam positions corresponding to beam position indexes included in a first beam position index set, the first beam position index set is a set of indexes of earth beam positions within a coverage area of the fifth device, the first parameter is used to determine a first SSB index, the first SSB index is an index of a beam of a to-be-measured SSB of a second device, and the second device is, for example, a satellite base station of a neighboring satellite. The fifth device sends a second message to a third device, where the third device is, for example, a terminal device, the second message includes a second parameter, and the second parameter is used to determine the first SSB index.

The fifth device receives the first message from the first device, where the first message includes the first SSB index set and the first parameter. After receiving the first SSB index set, the fifth device sends the SSB beam corresponding to the SSB index included in the first SSB index set, to cover a corresponding earth beam position within the coverage area of the fifth device, so that SSB indexes of the fifth device and the second device at a same beam position are different, thereby avoiding SSB interference. The fifth device sends the second parameter to the third device, to cause the third device to determine the index of the beam of the to-be-measured SSB of the second device, so that the third device can accurately measure the to-be-measured SSB of the second device, thereby reducing measurement overhead and improving measurement performance.

In a possible implementation, the first parameter includes a first offset value or a second SSB index set, the first offset value indicates a difference between an SSB index corresponding to an SSB beam of the fifth device and an SSB index corresponding to an SSB beam of the second device that covers a same earth beam position as the SSB beam of the fifth device, the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the second device, and the first beam position index is an index of an edge earth beam position within the coverage area of the fifth device. The second parameter includes the first offset value or the second SSB index set.

The fifth device sends, to the third device, the first offset value or the second SSB index set received from the first device, so that the third device can accurately determine and measure the index of the beam of the to-be-measured SSB of the second device based on the first offset value or the second SSB index set, thereby reducing measurement overhead and improving measurement performance.

In a possible implementation, the first parameter includes a second offset value, and the second offset value indicates an offset value of an SSB index of the fifth device. The fifth device receives a third message sent by the second device, where the third message includes a third offset value, and the third offset value indicates an offset value of an SSB index of the second device. The fifth device sends a fourth message to the second device, and the fourth message includes the second offset value. Optionally, the fifth device determines the first offset value based on the received second offset value and the received third offset value, where the first offset value indicates a difference between an SSB index corresponding to an SSB beam of the fifth device and an SSB index corresponding to an SSB beam of the second device that covers a same earth beam position as the SSB beam of the fifth device. Optionally, the fifth device determines the second SSB index set based on the third offset value, where the second SSB index set is a set of indexes of SSB beams covering earth beam positions corresponding to beam position indexes included in the second beam position index set, the second beam position index set includes an index of an earth beam position that is adjacent to or overlaps with an earth beam position corresponding to the first beam position index and that is within the coverage area of the second device, and the first beam position index is an index of an edge earth beam position within the coverage area of the fifth device. The fifth device sends the second message including the second parameter to the third device, where the second parameter includes the first offset value or the second SSB index set.

The fifth device determines the first offset value or the second SSB index set based on the received second offset value and/or third offset value, and sends the first offset value or the second SSB index set to the third device. The third device can accurately determine and measure the index of the beam of the to-be-measured SSB of the second device, thereby reducing measurement overhead and improving measurement performance.

The method provided in the first aspect further includes: A fifth device receives a fifth message sent by a first device, where the fifth message includes a second offset value, and the second offset value indicates an offset value of an SSB index of the fifth device. The fifth device determines a first synchronization signal block (synchronization signal block, SSB) index set based on the second offset value, where the first SSB index set is a set of indexes of SSB beams covering earth beam positions corresponding to beam position indexes included in a first beam position index set, and the first beam position index set is a set of indexes of earth beam positions within a coverage area of the fifth device. The fifth device sends a second message to a third device, where the second message includes a second parameter, the second parameter is used to determine a first SSB index, and the first SSB index is an index of a beam of a to-be-measured SSB of the second device.

The fifth device determines the first SSB index set based on the received second offset value. After determining the first SSB index set, the fifth device sends the SSB beam corresponding to the SSB index included in the first SSB index set, to cover a corresponding earth beam position within the coverage area of the fifth device, so that SSB indexes of the fifth device and the second device at a same beam position are different, thereby avoiding SSB interference. The fifth device sends the second parameter to the third device, to cause the third device to determine the index of the beam of the to-be-measured SSB of the second device, so that the third device can accurately measure the to-be-measured SSB of the second device, thereby reducing measurement overhead and improving measurement performance.

In a possible implementation, the fifth message further includes a third offset value, and the third offset value indicates an offset value of an SSB index of the second device. Optionally, the fifth device determines a first offset value based on the received second offset value and the received third offset value, where the first offset value indicates a difference between an SSB index corresponding to an SSB beam of the fifth device and an SSB index corresponding to an SSB beam of the second device that covers a same earth beam position as the SSB beam of the fifth device. Optionally, the fifth device determines a second SSB index set based on the third offset value, where the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the second device, and the first beam position index is an index of an edge earth beam position within the coverage area of the fifth device. The fifth device sends the second message including the second parameter to the third device, where the second parameter includes the first offset value or the second SSB index set. The third device can accurately determine and measure the index of the beam of the to-be-measured SSB of the second device, thereby reducing measurement overhead and improving measurement performance.

In a possible implementation, the fifth device receives a third message sent by the second device, where the third message includes the third offset value, and the third offset value indicates the offset value of the SSB index of the second device. The fifth device sends a fourth message to the second device, and the fourth message includes the second offset value. Optionally, the fifth device determines the first offset value based on the received second offset value and the received third offset value, where the first offset value indicates a difference between an SSB index corresponding to an SSB beam of the fifth device and an SSB index corresponding to an SSB beam of the second device that covers a same earth beam position as the SSB beam of the fifth device. Optionally, the fifth device determines the second SSB index set based on the third offset value, where the second SSB index set is a set of indexes of SSB beams covering earth beam positions corresponding to beam position indexes included in the second beam position index set, the second beam position index set includes an index of an earth beam position that is adjacent to or overlaps with an earth beam position corresponding to the first beam position index and that is within the coverage area of the second device, and the first beam position index is an index of an edge earth beam position within the coverage area of the fifth device. The fifth device sends the second message including the second parameter to the third device, where the second parameter includes the first offset value or the second SSB index set. The fifth device determines the first offset value or the second SSB index set based on the received second offset value and/or third offset value, and sends the first offset value or the second SSB index set to the third device. The third device can accurately determine and measure the index of the beam of the to-be-measured SSB of the second device, thereby reducing measurement overhead and improving measurement performance.

According to a second aspect, an embodiment of this application provides a communication method. The method may be performed by a satellite platform, may be performed by a component of the satellite platform, for example, a processor, a chip, or a chip system of the satellite platform, or may be implemented by a logical module or software that can implement all or some functions of the satellite platform.

The method provided in the second aspect includes: A first device receives a sixth message sent by a fourth device, where the first device is, for example, a satellite platform, and the fourth device is, for example, a ground operations control center, the sixth message includes a second offset value, and the second offset value indicates an offset value of an SSB index of a fifth device. The first device determines a first synchronization signal block (synchronization signal block, SSB) index set based on the second offset value, where the first SSB index set is a set of indexes of SSB beams covering earth beam positions corresponding to beam position indexes included in a first beam position index set, and the first beam position index set is a set of indexes of earth beam positions within a coverage area of the fifth device. The first device sends a first message to a fifth device, where the fifth device is, for example, a satellite base station, the first message includes the first SSB index set and a first parameter, the first parameter is used to determine a first SSB index, and the first SSB index is an index of a beam of a to-be-measured SSB of a second device.

The first device determines the first SSB index set based on the second offset value received from the fourth device, and sends the first SSB index set to the fifth device, and the fifth device sends the SSB beam corresponding to the SSB index included in the first SSB index set, to cover a corresponding earth beam position within the coverage area of the fifth device, so that SSB indexes of the fifth device and the second device at a same beam position are different, thereby avoiding SSB interference. In addition, the first device further sends the first parameter to the fifth device, to cause a third device to determine the index of the beam of the to-be-measured SSB of the second device, so that the third device can accurately measure the to-be-measured SSB of the second device, thereby reducing measurement overhead and improving measurement performance.

In a possible implementation, the sixth message further includes a third offset value, and the third offset value indicates an offset value of an SSB index of the second device. Optionally, the first device determines a first offset value based on the received second offset value and the received third offset value, where the first offset value indicates a difference between an SSB index corresponding to an SSB beam of the fifth device and an SSB index corresponding to an SSB beam of the second device that covers a same earth beam position as the SSB beam of the fifth device. Optionally, the first device determines a second SSB index set based on the third offset value, where the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the second device, and the first beam position index is an index of an edge earth beam position within the coverage area of the fifth device. The first parameter sent by the first device to the fifth device includes the first offset value or the second SSB index set. The fifth device sends the received first offset value or the received second SSB index set to the third device, so that the third device can accurately determine and measure the index of the beam of the to-be-measured SSB of the second device, thereby reducing measurement overhead and improving measurement performance.

In a possible implementation, the first parameter includes a second offset value. The fifth device receives the second offset value. The fifth device receives a third message sent by the second device, and the third message includes the third offset value. The fifth device sends a fourth message to the second device, and the fourth message includes the second offset value. Optionally, the fifth device determines the first offset value based on the received second offset value and the received third offset value. Optionally, the fifth device determines the second SSB index set based on the received third offset value. The fifth device sends the received first offset value or the received second SSB index set to the third device, so that the third device can accurately determine and measure the index of the beam of the to-be-measured SSB of the second device, thereby reducing measurement overhead and improving measurement performance.

The method provided in the second aspect further includes: A first device receives a sixth message sent by a fourth device, where the sixth message includes a second offset value, and the second offset value indicates an offset value of an SSB index of a fifth device. The first device sends a fifth message to the fifth device, where the fifth message includes the second offset value.

The first device sends, to the fifth device, the second offset value received from the fourth device, the fifth device determines a first SSB index set, and the fifth device sends an SSB beam corresponding to an SSB index included in the first SSB index set, to cover a corresponding earth beam position within a coverage area of the fifth device, so that SSB indexes of the fifth device and a second device at a same beam position are different, thereby avoiding SSB interference.

In a possible implementation, the fifth device receives the second offset value. The fifth device receives a third message sent by the second device, where the third message includes a third offset value, and the third offset value indicates an offset value of an SSB index of the second device. The fifth device sends a fourth message to the second device, and the fourth message includes the second offset value. Optionally, the fifth device determines a first offset value based on the received second offset value and the received third offset value. Optionally, the fifth device determines a second SSB index set based on the received third offset value. The fifth device sends the received first offset value or the received second SSB index set to a third device, so that the third device can accurately determine and measure an index of a beam of a to-be-measured SSB of the second device, thereby reducing measurement overhead and improving measurement performance.

In a possible implementation, the first device receives the sixth message sent by the fourth device, where the sixth message further includes the third offset value. The first device sends the fifth message to the fifth device, where the fifth message further includes the third offset value.

The first device sends, to the fifth device, the second offset value and the third offset value that are received from the fourth device, and the fifth device determines the first SSB index set and the first offset value, or determines the first SSB index set and the second SSB index set. The fifth device sends the SSB beam corresponding to the SSB index included in the first SSB index set, to cover the corresponding earth beam position within the coverage area of the fifth device, so that the SSB indexes of the fifth device and the second device at a same beam position are different, thereby avoiding SSB interference. The fifth device sends the determined first offset value or the determined second SSB index set to the third device, so that the third device can accurately determine and measure the index of the beam of the to-be-measured SSB of the second device, thereby reducing measurement overhead and improving measurement performance.

The method provided in the second aspect further includes: A first device receives a seventh message sent by a fourth device, where the seventh message includes a first synchronization signal block (synchronization signal block, SSB) index set and a first parameter, the first SSB index set is a set of indexes of SSB beams covering earth beam positions corresponding to beam position indexes included in a first beam position index set, the first beam position index set is a set of indexes of earth beam positions within a coverage area of a fifth device, the first parameter is used to determine a first SSB index, and the first SSB index is an index of a beam of a to-be-measured SSB of a second device. The first device sends a first message to the fifth device, where the first message includes the first SSB index set and the first parameter.

The first device sends, to the fifth device, the first SSB index set received from the fourth device, and the fifth device sends the SSB beam corresponding to the SSB index included in the first SSB index set, to cover a corresponding earth beam position within the coverage area of the fifth device, so that SSB indexes of the fifth device and the second device at a same beam position are different, thereby avoiding SSB interference. In addition, the first device further sends, to the fifth device, the first parameter received from the fourth device, to cause a third device to determine the index of the beam of the to-be-measured SSB of the second device, so that the third device can accurately measure the to-be-measured SSB of the second device, thereby reducing measurement overhead and improving measurement performance.

In a possible implementation, the first parameter includes a first offset value or a second SSB index set, the first offset value indicates a difference between an SSB index corresponding to an SSB beam of the fifth device and an SSB index corresponding to an SSB beam of the second device that covers a same earth beam position as the SSB beam of the fifth device, the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the second device, and the first beam position index is an index of an edge earth beam position within the coverage area of the fifth device.

The fifth device sends the received first offset value or the received second SSB index set to the third device, so that the third device can accurately determine and measure the index of the beam of the to-be-measured SSB of the second device, thereby reducing measurement overhead and improving measurement performance.

According to a third aspect, an embodiment of this application provides a communication method. The method may be performed by a ground operations control center, may be performed by a component of the ground operations control center component, for example, a processor, a chip, or a chip system of the ground operations control center, or may be implemented by a logical module or software that can implement all or some functions of the ground operations control center.

The method provided in the third aspect includes: A fourth device determines a second offset value, where the fourth device is, for example, a ground operations control center, and the second offset value indicates an offset value of an SSB index of a fifth device. The fourth device sends a sixth message to a first device, where the sixth message includes the second offset value.

Optionally, after receiving the second offset value, the first device may determine a first synchronization signal block (synchronization signal block, SSB) index set, and then send the first synchronization signal block index set to the fifth device. The first SSB index set is a set of indexes of SSB beams covering earth beam positions corresponding to beam position indexes included in a first beam position index set, and the first beam position index set is a set of indexes of earth beam positions within a coverage area of the fifth device.

Optionally, after receiving the second offset value, the first device may send the second offset value to the fifth device, and the fifth device determines the first SSB index set.

The fifth device sends the SSB beam corresponding to the SSB index included in the first SSB index set, to cover a corresponding earth beam position within the coverage area of the fifth device, so that the SSB indexes of the fifth device and the second device at a same beam position are different, thereby avoiding SSB interference.

In a possible implementation, the fourth device determines a third offset value, where the third offset value indicates an offset value of an SSB index of the second device. The fourth device sends the sixth message to the first device, where the sixth message further includes the third offset value.

Optionally, after receiving the second offset value and the third offset value, the first device may determine a first offset value or a second SSB index set, and then send the first offset value or the second SSB index set to the fifth device. The first offset value indicates a difference between an SSB index corresponding to an SSB beam of the fifth device and an SSB index corresponding to an SSB beam of the second device that covers a same earth beam position as the SSB beam of the fifth device, the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the second device, and the first beam position index is an index of an edge earth beam position within the coverage area of the fifth device.

Optionally, after receiving the second offset value and the third offset value, the first device may send the second offset value and/or the third offset value to the fifth device, and the fifth device determines the first offset value or the second SSB index set.

The fifth device sends the first offset value or the second SSB index set to a third device, so that the third device can accurately determine and measure an index of a beam of a to-be-measured SSB of the second device, thereby reducing measurement overhead and improving measurement performance.

The method provided in the third aspect further includes: A fourth device determines a second offset value and a third offset value, where the second offset value indicates an offset value of an SSB index of a fifth device, and the third offset value indicates an offset value of an SSB index of a second device. The fourth device determines a first synchronization signal block (synchronization signal block, SSB) index set based on the second offset value, where the first SSB index set is a set of indexes of SSB beams covering earth beam positions corresponding to beam position indexes included in a first beam position index set, and the first beam position index set is a set of indexes of earth beam positions within a coverage area of the fifth device. The fourth device sends a seventh message to a first device, where the seventh message includes the first SSB index set and a first parameter, the first parameter is used to determine a first SSB index, and the first SSB index is an index of a beam of a to-be-measured SSB of the second device.

After determining the first SSB index set, the fourth device sends the first SSB index set to the first device, the first device sends the first SSB index set to the fifth device, and the fifth device sends the SSB beam corresponding to the SSB index included in the first SSB index set, to cover a corresponding earth beam position within the coverage area of the fifth device, so that SSB indexes of the fifth device and the second device at a same beam position are different, thereby avoiding SSB interference.

In a possible implementation, the fourth device determines a first offset value based on the second offset value and the third offset value, where the first offset value indicates a difference between an SSB index corresponding to an SSB beam of the fifth device and an SSB index corresponding to an SSB beam of the second device that covers a same earth beam position as the SSB beam of the fifth device. The fourth device determines a second SSB index set based on the third offset value, where the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to the first beam position index and that is within a coverage area of the second device, and the first beam position index is an index of an edge earth beam position within the coverage area of the fifth device. The first parameter includes the first offset value or the second SSB index set.

After determining the first offset value or the second SSB index set, the fourth device sends the first offset value or the second SSB index set to the first device, and the first device sends the first offset value or the second SSB index set to the fifth device. The fifth device sends the received first offset value or the received second SSB index set to a third device, so that the third device can accurately determine and measure the index of the beam of the to-be-measured SSB of the second device, thereby reducing measurement overhead and improving measurement performance.

According to a fourth aspect, an embodiment of this application provides a communication method. The method may be performed by a terminal device, may be performed by a component of the terminal device, for example, a processor, a chip, or a chip system of the terminal device, or may be implemented by a logical module or software that can implement all or some functions of the terminal device.

The method provided in the third aspect includes: A third device receives a second message sent by a fifth device, where the second message includes a second parameter, the second parameter is used to determine a first synchronization signal block (synchronization signal block, SSB) index, and the first SSB index is an index of a beam of a to-be-measured SSB of a second device. The third device measures the SSB corresponding to the first SSB index.

Based on the received second parameter, the third device can accurately determine and measure the index of the beam of the to-be-measured SSB of the second device, thereby reducing measurement overhead and improving measurement performance.

In a possible implementation, the second parameter includes a first offset value or a second SSB index set, the first offset value indicates a difference between an SSB index corresponding to an SSB beam of the fifth device and an SSB index corresponding to an SSB beam of the second device that covers a same earth beam position as the SSB beam of the fifth device, the second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the second device, and the first beam position index is an index of an edge earth beam position within a coverage area of the fifth device.

Optionally, the second parameter includes the first offset value. The third device determines that the first SSB index is equal to a sum of the second SSB index and the first offset value, or determines that the first SSB index is equal to the second SSB index minus the first offset value, where the second SSB index is an index of an SSB beam that is of the fifth device and that covers a geographic area in which the third device is located.

Optionally, the second parameter includes the second SSB index set. The third device determines that the first SSB index is an SSB index included in the second SSB index set.

Based on the received first offset value or the received second SSB index set, the third device can accurately determine and measure the index of the beam of the to-be-measured SSB of the second device, thereby reducing measurement overhead and improving measurement performance.

According to a fifth aspect, this application provides a communication apparatus. The communication apparatus has a function of implementing the first aspect. For example, the communication apparatus includes a corresponding module, unit, or means (means) for performing an operation in the first aspect. The module, unit, or means may be specifically implemented by using software, or implemented by using hardware, or implemented by using a combination of software and hardware.

According to a sixth aspect, this application provides a communication apparatus. The communication apparatus has a function of implementing the second aspect. For example, the communication apparatus includes a corresponding module, unit, or means (means) for performing an operation in the second aspect. The module, unit, or means may be specifically implemented by using software, or implemented by using hardware, or implemented by using a combination of software and hardware.

According to a seventh aspect, this application provides a communication apparatus. The communication apparatus has a function of implementing the third aspect. For example, the communication apparatus includes a corresponding module, unit, or means (means) for performing an operation in the third aspect. The module, unit, or means may be specifically implemented by using software, or implemented by using hardware, or implemented by using a combination of software and hardware.

According to an eighth aspect, this application provides a communication apparatus. The communication apparatus has a function of implementing the fourth aspect. For example, the communication apparatus includes a corresponding module, unit, or means (means) for performing an operation in the fourth aspect. The module, unit, or means may be specifically implemented by using software, or implemented by using hardware, or implemented by using a combination of software and hardware.

According to a ninth aspect, this application provides a communication apparatus, where the communication apparatus includes a memory and one or more processors. The memory is configured to store a part or all of a necessary computer program or instructions for implementing the function in the first aspect. The one or more processors may execute the computer program or instructions, and when the computer program or instructions are executed, the communication apparatus is caused to implement the method in any one of the possible designs or implementations of the first aspect.

In a possible design, the communication apparatus may further include an interface circuit, and the processor is configured to communicate with another apparatus or component by using the interface circuit.

In a possible design, the communication apparatus may further include the memory.

The communication apparatus may be a terminal, or a communication module in the terminal, or a chip that is responsible for a communication function in the terminal, for example, a modem chip (also referred to as a baseband chip), or an SoC or an SIP chip that includes a modem module.

According to a tenth aspect, this application provides a communication apparatus, where the communication apparatus includes a memory and one or more processors. The memory is configured to store a part or all of a necessary computer program or instructions for implementing the function in the second aspect. The one or more processors may execute the computer program or instructions, and when the computer program or instructions are executed, the communication apparatus is caused to implement the method in any one of the possible designs or implementations of the second aspect.

In a possible design, the communication apparatus may further include an interface circuit, and the processor is configured to communicate with another apparatus or component by using the interface circuit.

In a possible design, the communication apparatus may further include the memory.

The communication apparatus may be a terminal, or a communication module in the terminal, or a chip that is responsible for a communication function in the terminal, for example, a modem chip (also referred to as a baseband chip), or an SoC or an SIP chip that includes a modem module.

According to an eleventh aspect, this application provides a communication apparatus, where the communication apparatus includes a memory and one or more processors. The memory is configured to store a part or all of a necessary computer program or instructions for implementing the function in the third aspect. The one or more processors may execute the computer program or instructions, and when the computer program or instructions are executed, the communication apparatus is caused to implement the method in any one of the possible designs or implementations of the third aspect.

In a possible design, the communication apparatus may further include an interface circuit, and the processor is configured to communicate with another apparatus or component by using the interface circuit.

In a possible design, the communication apparatus may further include the memory.

The communication apparatus may be a terminal, or a communication module in the terminal, or a chip that is responsible for a communication function in the terminal, for example, a modem chip (also referred to as a baseband chip), or an SoC or an SIP chip that includes a modem module.

According to a twelfth aspect, this application provides a communication apparatus, where the communication apparatus includes a memory and one or more processors. The memory is configured to store a part or all of a necessary computer program or instructions for implementing the function in the fourth aspect. The one or more processors may execute the computer program or instructions, and when the computer program or instructions are executed, the communication apparatus is caused to implement the method in any one of the possible designs or implementations of the fourth aspect.

In a possible design, the communication apparatus may further include an interface circuit, and the processor is configured to communicate with another apparatus or component by using the interface circuit.

In a possible design, the communication apparatus may further include the memory.

The communication apparatus may be a terminal, or a communication module in the terminal, or a chip that is responsible for a communication function in the terminal, for example, a modem chip (also referred to as a baseband chip), or an SoC or an SIP chip that includes a modem module.

According to a thirteenth aspect, this application provides a computer-readable storage medium. The computer storage medium stores computer-readable instructions. When a computer reads and executes the computer-readable instructions, the computer is caused to perform the method according to any one of the possible designs of the first aspect to the fourth aspect.

According to a fourteenth aspect, this application provides a computer program product. When a computer reads and executes the computer program product, the computer is caused to perform the method according to any one of the possible designs of the first aspect to the fourth aspect.

### BRIEF DESCRIPTION OF DRAWINGS

FIG. 1 is a diagram of an architecture of a communication system 100 according to an embodiment of this application;
FIG. 2 is a diagram of a relationship between a ground operations control center, satellite platforms, and satellite payloads;
FIG. 3A is a diagram of an NTN scenario based on a transparent payload;
FIG. 3B is a diagram of an NTN scenario based on a regenerative payload;
FIG. 4 is a diagram of a relationship between a coverage area of a satellite and SSB beams;
FIG. 5 is a diagram of an SSB pattern;
FIG. 6 is a diagram of a scanning manner for earth-fixed beam positions in an NTN;
FIG. 7 is a diagram of cell handover in an NTN;
FIG. 8 is a diagram of an example of interference between a serving satellite and a neighboring satellite in an overlapping area;
FIG. 9A is a schematic flowchart of an SSB configuration method according to Embodiment 1 of this application;
FIG. 9B is a diagram of an example in which there is no SSB interference between a serving satellite and a neighboring satellite in an overlapping area;
FIG. 9C is a diagram of another example in which there is no SSB interference between a serving satellite and a neighboring satellite in an overlapping area;
FIG. 10 is a schematic flowchart of an SSB configuration method according to Embodiment 2 of this application;
FIG. 11 is a schematic flowchart of an SSB configuration method according to Embodiment 3 of this application;
FIG. 12 is a schematic flowchart of an SSB configuration method according to Embodiment 4 of this application;
FIG. 13 is a schematic flowchart of an SSB configuration method according to Embodiment 5 of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

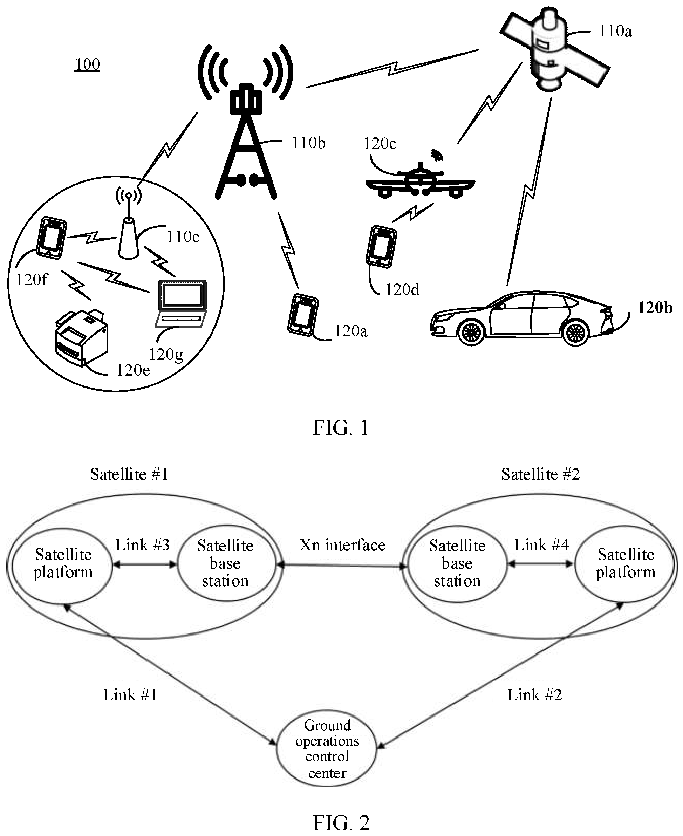

FIG. 1 is a diagram of an architecture of a communication system 100 according to an embodiment of this application. The communication system 100 may include at least one network device (110a, 110b, and 110c), and may further include at least one terminal device (120a to 120g). The network device and the terminal device may be connected to each other in a wired or wireless manner. FIG. 1 is merely a diagram. The communication system may further include another network device, for example, may further include a wireless relay device and a wireless backhaul device.

A network device provided in embodiments of this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit-control plane (CU control plane, CU-CP) module, or a central unit-user plane (CU user plane, CU-UP) module. The network device may be a satellite (for example, 110a in FIG. 1) or may be a macro base station (for example, 110b in FIG. 1). Alternatively, the access network device may be a micro base station or an indoor base station (for example, 110c in FIG. 1), or may be a relay node or a donor node, or the like. A specific technology and a specific device form that are used for the access network device are not limited in this application.

A terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenarios include but are not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, autonomous driving, remote medical, a smart grid, smart furniture, a smart office, smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used for the terminal device are not limited in this application.

The base station and/or the terminal device may be at fixed positions or may be movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. An environment/a scenario in which the base station and the terminal device are located is not limited in this application. The base station and the terminal device may be deployed in a same environment/scenario or different environments/scenarios. For example, the base station and the terminal device are both deployed on the land. Alternatively, the base station is deployed on the land, and the terminal device is deployed on the water. Examples are not described one by one.

The technical solutions in embodiments of this application may be applied to various communication systems, for example, a long term evolution (long term evolution, LTE) system, a 5G system or a new radio (new radio, NR) system, a non-terrestrial network (non-terrestrial network, NTN), and a future communication system like a 6th generation mobile communication system. This is not limited in this application.

Network elements in this application may include a ground operations control center, a satellite platform, and a satellite base station (that is, the network device mentioned above). The ground operations control center refers to a satellite operations control center deployed on the ground, which can perform complex calculation processing, and control and manage satellites running in orbit. The satellite platform refers to a platform deployed on a satellite, including a remote sensing measurement and control system, a power supply system, a structural system, a propulsion system, a data management system, a thermal control system, an attitude and orbit control system, and the like. The satellite base station may also be referred to as a satellite payload. For at least some functions of the satellite base station, refer to the foregoing part of the network device.

FIG. 2 is a diagram of a relationship between a ground operations control center, satellite platforms, and satellite base stations. There are different links between the ground operations control center and satellite platforms of different satellites, for example, a link #1 and a link #2 in FIG. 2. There are links between the satellite platforms and satellite base stations of the different satellites. A link #3 in FIG. 2 is a link between a satellite platform of a satellite #1 and a satellite base station of the satellite #1, and a link #4 in FIG. 2 is a link between a satellite platform of a satellite #2 and a satellite base station of the satellite #2. In addition, there is a connection between the satellite base stations of the different satellites. In FIG. 2, the satellite base station of the satellite #1 and the satellite base station of the satellite #2 are connected via an Xn interface. It may be understood that, in this embodiment of this application, the Xn interface is used as an example to describe an interface between satellite base stations. A name of the interface is not limited in this embodiment of this application.

The following first describes several concepts that may be used in this application.

### 1. NTN network

The NTN network is a network that uses radio frequency resources on a satellite (or an unmanned aircraft system (unmanned aircraft system, UAS) platform, a high altitude platform station (high altitude platform station, HAPS), and the like). In comparison with a terrestrial cellular network (for example, a 5G mobile communication system), the NTN network features wide coverage, low latency, broadband capability, and low costs. As a supplement and extension to terrestrial networks, the NTN network can implement wide-area seamless coverage that cannot be achieved by wired telephone networks or terrestrial mobile communication networks, thereby effectively addressing internet access issues in areas with insufficient communication infrastructure. A large quantity of satellites are deployed in a low earth orbit, and a round-trip transmission latency of data between a satellite and a terrestrial terminal is greatly reduced to a low latency of tens of milliseconds. Use of technologies such as high frequency bands, multi-point beams, and frequency reuse significantly improves communication capability of the satellites, reduces costs per unit of bandwidth, and can meet requirements of services with high information rates. In comparison with communication infrastructure such as terrestrial 5G base stations and submarine fiber optic cables, the NTN has a significant advantage in costs. Modern small satellites have low research and development and manufacturing costs, and a software-defined technology can further prolong service lives of in-orbit satellites. The NTN network may be applied to scenarios such as global coverage (such as remote areas and ocean-going ships), emergency relief (such as disaster monitoring and emergency communication), internet of everything, and high-speed movement (such as high-speed rails and airplanes).

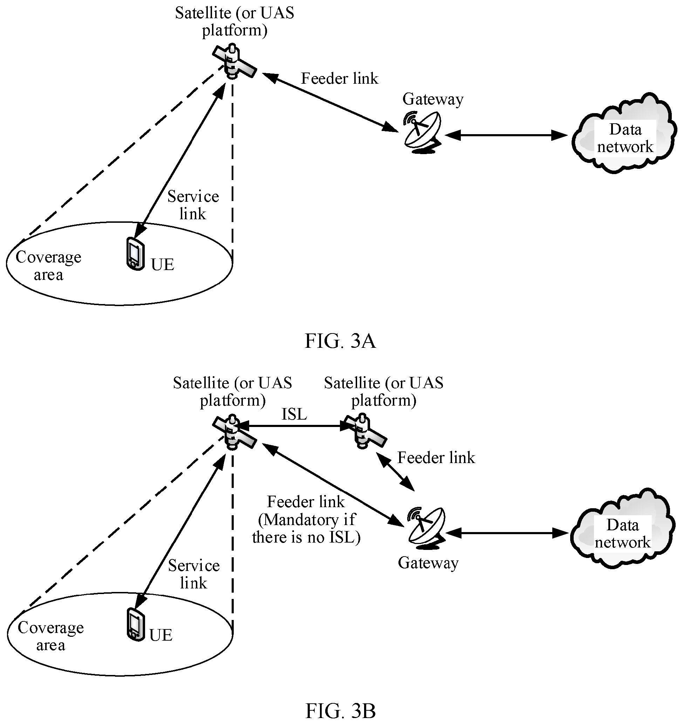

Typical scenarios for the NTN network to provide terminal device access are a transparent payload (transparent payload) and a regenerative payload (regenerative payload). FIG. 3A is a diagram of an NTN scenario based on a transparent payload. The transparent payload is a payload that changes a frequency carrier of an uplink radio frequency signal and filters and amplifies the signal before downlink transmission. This payload has only a radio frequency processing unit and does not have processing such as baseband demodulation or decoding. Therefore, a signal waveform is unchanged and is repeated. FIG. 3B is a diagram of an NTN scenario based on a regenerative payload. The regenerative payload is a payload that transforms and amplifies an uplink radio frequency (radio frequency, RF) signal before downlink transmission. Transformation of a signal refers to digital processing, and may include demodulation, decoding, re-encoding, re-modulation, and/or filtering. This is equivalent to the satellite (or the UAS platform, the HAPS, and the like) having all or some functions of a base station.

The NTN network generally has the following elements:
(1) There are one or more gateways (Gateways) that connect the NTN network and a common data network (common data network).
(2) A feeder link (feeder link) is a radio link between the gateway and the satellite (or the UAS platform).
(3) A service link (service link) is a radio link between a terminal device and the satellite (or the UAS platform).
(4) The satellite (or the UAS platform) can implement the transparent payload and the regenerative payload.
(5) Whether there is an inter-satellite link (inter-satellite link, ISL) on a satellite constellation is optional. The inter-satellite link requires that the satellite is a regenerative payload (that is, if there is the inter-satellite link, the satellite needs to be the regenerative payload). The ISL may operate at an RF frequency or an optical band.
(6) The terminal device is served by a satellite (or the UAS platform, the HAPS, and the like) in a target service area.

### 2. Mobility management

In a terrestrial communication system, due to movement, a terminal performs access selection and handover between different base stations, and determining of a handover-related status may usually depend on mobility management. The mobility management mainly refers to a measurement procedure related to radio resource management (radio resource management, RRM) and a mobility signaling procedure triggered based on a measurement result. During the mobility management, a base station or a network side delivers an RRM measurement task to the terminal, including two basic measurement configurations:
- Measurement object: specifies a frequency band for measurement, a form of a reference signal, a time domain position of a to-be-measured reference signal, and the like.
- Measurement reporting: specifies a condition for triggering measurement, a manner for reporting a measurement result, and the like.

In an NR system, there are mainly two types of reference signals that can be used for RRM measurement: an SSB and a channel state information-reference signal (channel state information-reference signal, CSI-RS). This application is mainly for SSB-based mobility management.

The SSB is a signal having a specific structure in frequency domain, and is used by user equipment to synchronize and position a base station at a physical layer. Each base station has unique identification information in the SSB. The user equipment can detect and identify a nearby base station by decoding the identification information of the SSB, perform time synchronization by using the SSB, and select an appropriate cell for connection.

During RRM measurement, if SSBs of two measurement cells have a same center frequency and a same subcarrier spacing, measurement between the two cells is referred to as intra-frequency measurement; if SSBs of two measurement cells do not have a same center frequency or a same subcarrier spacing, measurement between the two cells is referred to as inter-frequency measurement. For the SSB-based mobility management, because SSBs are not contiguous in time domain in most cases, when performing measurement, the terminal does not need to continuously search for and measure the SSBs in time domain, but only needs to perform an operation in a time window in which these SSBs can be locked. Therefore, a concept of SMTC is introduced to measurement configurations delivered by the network side in the NR protocol. The SMTC is configured at intervals based on a specific periodicity (a minimum periodicity is 5 ms, and a maximum periodicity is 160 ms) in time domain. A measurement window of the SMTC maintains a fixed duration (a minimum duration is 1 ms, and a maximum duration is 5 ms). From a measurement perspective, the terminal searches for and measures the SSBs only in the measurement window of the SMTC, and considers that an SSB outside the SMTC does not exist. The network side configures one SMTC for each SSB measurement frequency. For intra-frequency measurement, SSBs that need to be measured in a plurality of cells are included in the SMTC, and the SMTC is delivered by a network side of a serving cell to the terminal. In addition, for a specific cell on the SSB frequency, the network side may further configure another SMTC with a shorter periodicity, but measurement window durations of the two SMTCs need to be consistent.

### 3. Satellite coverage area

Compared with a terrestrial communication system, a satellite communication system features a wider coverage area, a larger transmission loss, a higher moving speed, and the like. Different from the terrestrial system requiring only a maximum of eight SSB beams (applicable to a frequency range 1 (Frequency Range 1, FR1)) or 64 SSB beams (applicable to a frequency range 2 (Frequency Range 2, FR2)) to cover a service area of a single base station, the satellite communication system may require hundreds or even thousands of SSB beams.

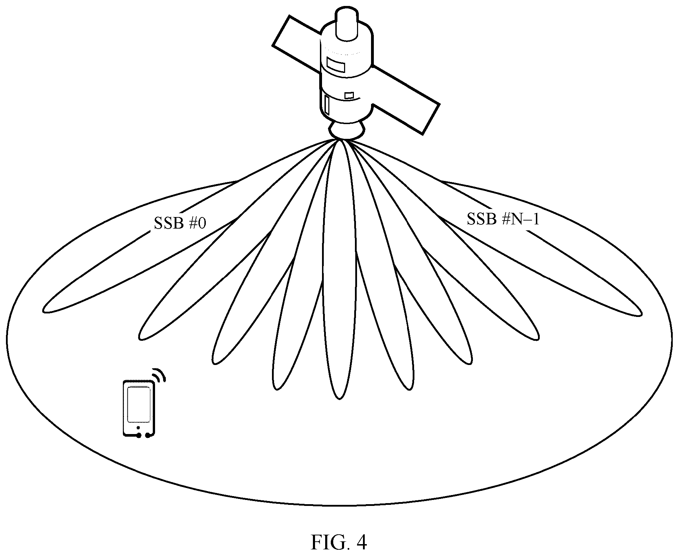

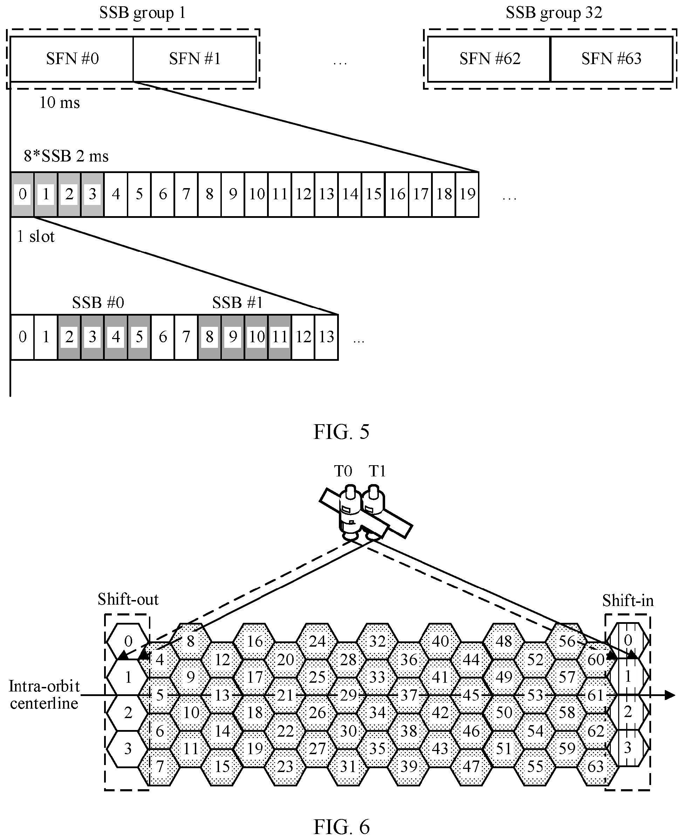

FIG. 4 is a diagram of a relationship between a coverage area of a satellite and SSB beams. N SSB beams are required to implement seamless coverage of the satellite, where a value of N is related to a satellite orbit altitude and a beam width. For example, in a satellite communication system at an orbit altitude of 600 km, a single satellite can serve an area of hundreds of thousands of square kilometers. To overcome impact of a path loss caused by a transmission distance and ensure communication service quality, the satellite usually uses a large-scale antenna array to provide a higher array gain. However, this also results in a narrower main lobe of the beam. For example, a coverage radius of a 3 dB beamwidth is only 10-plus kilometers, and a coverage area is about hundreds of square kilometers. Then, thousands of beams are required to implement seamless coverage of a single satellite service area by using narrow beams. Further, even if specific widening is performed on the beams, to ensure a gain level, hundreds of beams are needed to implement coverage. When a quantity of scanned beams reaches hundreds, a complete scan takes hundreds of milliseconds. FIG. 5 is a diagram of an SSB pattern. Each SSB periodicity includes 256 SSBs, which are grouped into 32 groups, with eight SSBs in each group. Each group lasts for 20 ms, and the 256 SSBs last for 640 ms in total.

### 4. Earth-fixed beam position

A scanning manner for the earth-fixed beam position means that indexes of SSBs covering same areas on the ground remain unchanged within a period of time. FIG. 6 is a diagram of a scanning manner for earth-fixed beam positions in an NTN. At a time instant T0, an SSB scanning pattern of a satellite is an area indicated by dashed lines. At a time instant T1, an SSB scanning pattern of the satellite is an area indicated by solid lines. From a perspective of the satellite, the SSB scanning pattern changes with movement of the satellite. As shown in FIG. 6, there is a mapping relationship between SSB indexes and earth beam positions, and one SSB covers one beam position. To avoid changes in SSB indexes corresponding to same beam positions for a single satellite, a rolling mapping pattern shown in FIG. 6 may be used. Assuming that an intra-orbit centerline is in a horizontal direction from left to right, SSB indexes {#0, #1, #2, #3} located at the leftmost positions at the time instant T0 are shifted, at the time instant T1, to a right side of SSB indexes {#60, #61, #62, #63} located at the rightmost positions at the time instant T0. During SSB measurement, a network can deliver a window duration to perform SSB measurement on neighboring satellites.

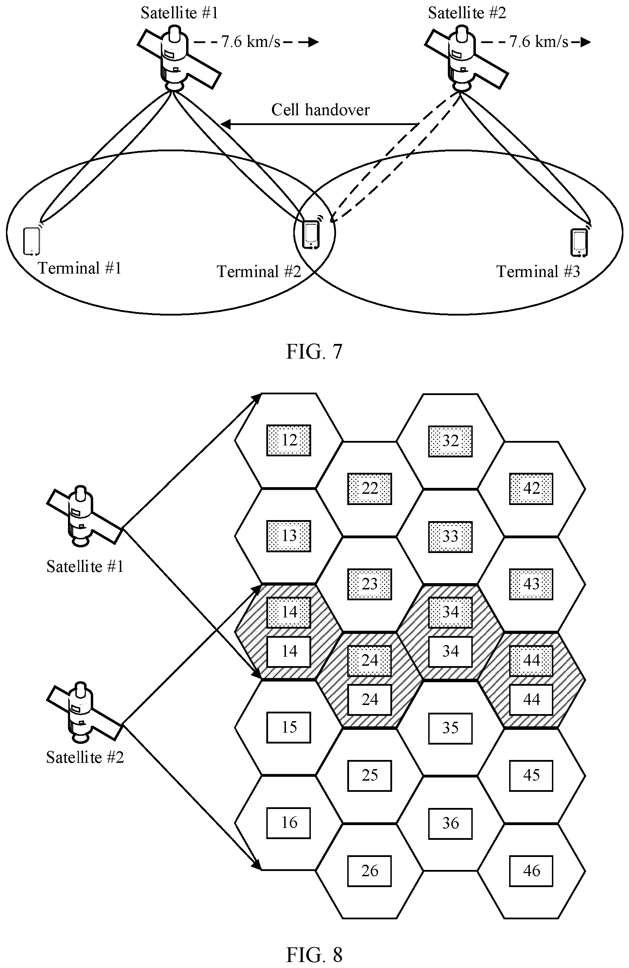

In a satellite communication system, because low-orbit satellites move at high speeds, and terminals frequently perform handovers among a plurality of satellites, mobility management is particularly important. FIG. 7 is a diagram of cell handover in an NTN. Both a satellite #1 and a satellite #2 move at a speed of 7.6 km/s. A terminal #1 is served by the satellite #1, a terminal #3 is served by the satellite #2, and a terminal #2 is in an overlapping area between a service area of the satellite #1 and a service area of the satellite #2. The terminal #2 was served by the satellite #2 at a previous time instant. The satellite #2 is moving away from the terminal #2, and cannot continue to provide a service for the terminal #2 in a next period of time, but the satellite #1 is approaching the terminal #2, and may provide a service for the terminal #2 in the next period of time. Therefore, the terminal #2 performs a cell handover process at a current time instant, and is served by the satellite #1 at a next time instant.

However, excessive SSB beams of the satellite significantly prolong the time required for the terminal to search for and measure SSBs in mobility management. Further, because distances from a serving satellite and a neighboring satellite to the terminal are different, latencies of transmitting SSBs to the terminal are also different. To ensure that the SMTC can include to-be-measured SSBs of the serving satellite and the neighboring satellite, a longer measurement window duration needs to be configured. However, an excessively long SMTC window duration significantly reduces measurement efficiency of the terminal. Power consumption overhead for continuously searching for SSBs by the terminal significantly increases. In addition, overhead of time-frequency resources occupied for measuring SSBs by the terminal also increases, significantly limiting data transmission of the terminal.

Both the serving satellite and the neighboring satellite use an SSB rolling mapping pattern, but mapping rules for the serving satellite and the neighboring satellite are not limited. In an overlapping area between the serving satellite and the neighboring satellite, if an SSB index of the serving satellite is the same as that of the neighboring satellite at a same beam position or an overlapping beam position, the serving satellite and the neighboring satellite send SSBs at the same time, causing interference. FIG. 8 is a diagram of interference between a serving satellite and a neighboring satellite in an overlapping area. Each hexagon represents an earth beam position, a number in the hexagon represents an SSB index, and a shaded hexagon represents an overlapping area between a satellite #1 and a satellite #2. It can be learned that SSB indexes of the satellite #1 and the satellite #2 in the overlapping area are the same. As a result, at a same time instant, a terminal at an earth beam position in the overlapping area may receive SSB signals from the satellite #1 and the satellite #2, and interference is generated.

To resolve the foregoing technical problems, embodiments of this application provide the following communication method for SSB configuration, so as to mitigate SSB interference from neighboring satellites, enable accurate measurement of SSBs of the neighboring satellites, and reduce SSB measurement overhead.

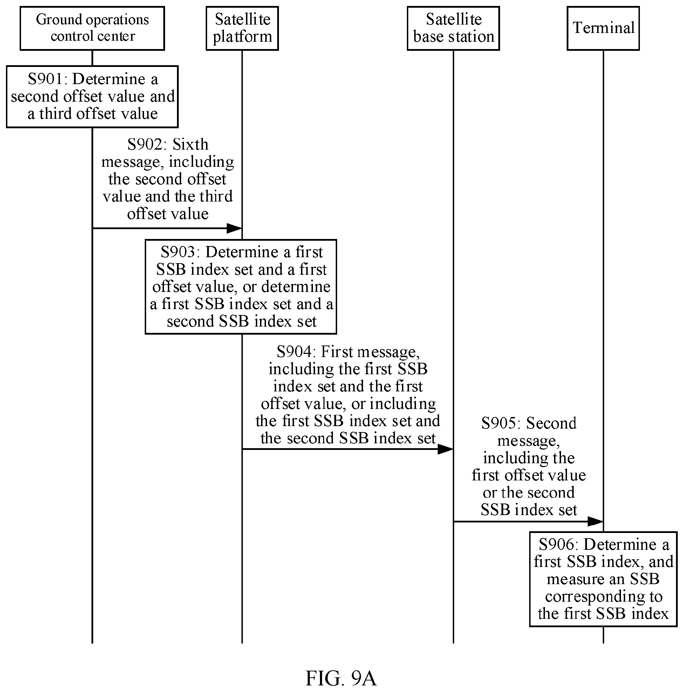

FIG. 9A is a schematic flowchart of a communication method (or may be referred to as an SSB configuration method) according to Embodiment 1 of this application. The method includes the following steps.

S901: A ground operations control center determines a second offset value and a third offset value.

In some possible implementations, a mapping rule indicates a mapping relationship between an SSB index and a beam position index. M mapping rules may be predefined or preconfigured for the ground operations control center, a satellite platform, and a satellite base station. For example, the M mapping rules are defined in a protocol, where M is greater than or equal to 1. Optionally, when M is greater than 1, the ground operations control center further determines a first rule index, for indicating a determined mapping rule to the satellite platform or the satellite base station.

The second offset value and the third offset value are both used for determining the SSB index according to the mapping rule. The second offset value is an offset value corresponding to a serving satellite, and the third offset value is an offset value corresponding to a neighboring satellite.

A third parameter is used when the SSB index is calculated according to the mapping rule, and is associated with the mapping rule. Values of Q third parameters may be predefined or preconfigured for the ground operations control center, the satellite platform, and the satellite base station. For example, the values of the Q third parameters are defined in a protocol, where Q is greater than or equal to 1. Optionally, when Q is greater than 1, the ground operations control center further determines the values of the third parameters.

For example, a mapping rule #1 may be:
SSB index=(beam position index+offset value) mod N

If an SSB index of the serving satellite is to be calculated, the offset value is an offset value corresponding to the serving satellite. If an SSB index of the neighboring satellite is to be calculated, the offset value is an offset value corresponding to the neighboring satellite. The ground operations control center may plan an offset value corresponding to each satellite. For example, offset values corresponding to satellites #1, #2, #3, #4, and #5 are 2, 4, 6, 8, and 10. N represents a maximum quantity of SSB indexes, for example, N=64/128/256/512. The value of N is not limited in this application. In this example, the third parameter is N, the second offset value is the offset value corresponding to the serving satellite, and the third offset value is the offset value corresponding to the neighboring satellite.

For example, a mapping rule #2 may be:
SSB index=(beam position index+satellite index) mod N

If an SSB index of the serving satellite is to be calculated, the satellite index is a satellite index of the serving satellite. If an SSB index of the neighboring satellite is to be calculated, the satellite index is a satellite index of the neighboring satellite. N represents a maximum quantity of SSB indexes, for example, N=64/128/256/512. The value of N is not limited in this application. In this example, the third parameter is N, the second offset value is the satellite index of the serving satellite, and the third offset value is the satellite index of the neighboring satellite.

It may be understood that, in this embodiment of this application, the mapping rule #1 and the mapping rule #2 are used as examples to describe the mapping relationship between the SSB index and the beam position index. The mapping rule is not limited in this embodiment of this application.

S902: The ground operations control center sends a sixth message to the satellite platform, where the sixth message includes the second offset value and the third offset value.

In some possible implementations, there is a link between the ground operations control center and the satellite platform for communication, and the ground operations control center sends the sixth message to the satellite platform over the link, where the sixth message includes the second offset value and the third offset value.

It may be understood that if there is no link between the ground operations control center and the satellite platform, the sixth message may be forwarded to the satellite platform over another link. A manner of interaction between the ground operations control center and the satellite platform is not limited in this embodiment of this application.

Optionally, the sixth message further includes the first rule index and/or the third parameter.

S903: The satellite platform determines a first SSB index set and a first offset value, or determines a first SSB index set and a second SSB index set.

If the sixth message received by the satellite platform includes the second offset value and the third offset value, the satellite platform may determine the first SSB index set and the first offset value, or determine the first SSB index set and the second SSB index set.

In some possible implementations, the satellite platform determines the first SSB index set based on the predefined or preconfigured mapping rule, the predefined or preconfigured third parameter, and the predefined or preconfigured second offset value. The first SSB index set is a set of indexes of SSB beams covering earth beam positions corresponding to beam position indexes included in a first beam position index set, and the first beam position index set is a set of indexes of earth beam positions within a coverage area of the serving satellite.

For example, the predefined or preconfigured mapping rule is the mapping rule #1, the third parameter is N, with a value of 256, the second offset value is the offset value corresponding to the serving satellite, with a value of 2, and the first beam position index set is {#12, #13, #14}. If an SSB index corresponding to an earth beam position whose beam position index is #12 is equal to (12+2) mod 256=14, an SSB index corresponding to an earth beam position whose beam position index is #13 is equal to (13+2) mod 256=15, and an SSB index corresponding to an earth beam position whose beam position index is #14 is equal to (14+2) mod 256=16, the first SSB index set is {#14, #15, #16}.

In some possible implementations, the satellite platform determines the first offset value based on the second offset value and the third offset value. For example, the first offset value is equal to the second offset value minus the third offset value. For example, if the second offset value is 2, and the third offset value is 4, the first offset value is equal to 2-4=-2. For example, the first offset value is equal to the third offset value minus the second offset value. For example, if the second offset value is 2, and the third offset value is 4, the first offset value is equal to 4-2=2.

In some possible implementations, the satellite platform determines the second SSB index set based on the predefined or preconfigured mapping rule, the predefined or preconfigured third parameter, and the predefined or preconfigured third offset value. The second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of the neighboring satellite, and the first beam position index is an index of an edge earth beam position within the coverage area of the serving satellite.

For example, if the predefined or preconfigured mapping rule is the mapping rule #1, the third parameter is N with a value of 256, the third offset value is an offset value corresponding to the neighboring satellite, with a value of 4, the first beam position index is #14, and indexes of earth beam positions adjacent to or overlapping with the earth beam position corresponding to the first beam position index are {#12, #13}, the second beam position index set is {#12, #13, #14}. If an SSB index of the neighboring satellite corresponding to the earth beam position whose beam position index is #12 is equal to (12+4) mod 256=16, an SSB index of the neighboring satellite corresponding to the earth beam position whose beam position index is #13 is equal to (13+4) mod 256=17, and an SSB index of the neighboring satellite corresponding to the earth beam position whose beam position index is #14 is equal to (14+4) mod 256=18, the second SSB index set is {#16, #17, #18}.

Optionally, the sixth message received by the satellite platform includes the third parameter, the second offset value, and the third offset value.

In some possible implementations, the satellite platform determines the first SSB index set based on the predefined or preconfigured mapping rule, the predefined or preconfigured third parameter, and the predefined or preconfigured second offset value. For details, refer to the foregoing example.

In some possible implementations, the satellite platform determines the first offset value based on the second offset value and the third offset value. For details, refer to the foregoing example.

In some possible implementations, the satellite platform determines the second SSB index set based on the predefined or preconfigured mapping rule, the predefined or preconfigured third parameter, and the predefined or preconfigured third offset value. For details, refer to the foregoing example.

Optionally, the sixth message received by the satellite platform includes the second offset value, the third offset value, and the first rule index.

In some possible implementations, the satellite platform determines the first SSB index set based on the mapping rule indicated by the first rule index, the predefined or preconfigured third parameter, and the predefined or preconfigured second offset value. For details, refer to the foregoing example.

In some possible implementations, the satellite platform determines the first offset value based on the second offset value and the third offset value. For details, refer to the foregoing example.

In some possible implementations, the satellite platform determines the second SSB index set based on the mapping rule indicated by the first rule index, the predefined or preconfigured third parameter, and the predefined or preconfigured third offset value. For details, refer to the foregoing example.

Optionally, the sixth message received by the satellite platform includes the third parameter, the second offset value, the third offset value, and the first rule index.

In some possible implementations, the satellite platform determines the first SSB index set based on the mapping rule indicated by the first rule index, the third parameter, and the second offset value. For details, refer to the foregoing example.

In some possible implementations, the satellite platform determines the first offset value based on the second offset value and the third offset value. For details, refer to the foregoing example.

In some possible implementations, the satellite platform determines the second SSB index set based on the mapping rule indicated by the first rule index, the third parameter, and the third offset value. For details, refer to the foregoing example.

S904: The satellite platform sends a first message to the satellite base station, where the first message includes the first SSB index set and the first offset value, or the first message includes the first SSB index set and the second SSB index set.

In some possible implementations, there is a link between the satellite platform and the satellite base station for communication, and communication over the link may be wired communication or wireless communication. The satellite platform sends the first message to the satellite base station over the link.

It may be understood that, if there is no link between the satellite platform and the satellite base station, the first message may be forwarded to the satellite base station over another link. A manner of interaction between the satellite platform and the satellite base station is not limited in this embodiment of this application.

In some possible implementations, after obtaining the first SSB index set, the satellite base station may send the SSB beam corresponding to the SSB index included in the first SSB index set, to cover a corresponding earth beam position within the coverage area of the serving satellite.

S905: The satellite base station sends a second message to a terminal, where the second message includes the first offset value or the second SSB index set.

If the first message received by the satellite base station includes the first SSB index set and the first offset value, or includes the first SSB index set and the second SSB index set, the satellite base station may send the second message to the terminal, where the second message includes the first offset value or the second SSB index set.

In some possible implementations, the satellite base station sends the second message to a terminal at an earth beam position within the coverage area of the serving satellite, where the second message includes the first offset value.

In some possible implementations, the satellite base station sends the second message to a terminal at an edge earth beam position within the coverage area of the serving satellite, where the second message includes the first offset value.

In some possible implementations, the satellite base station sends the second message to a terminal at an edge earth beam position within the coverage area of the serving satellite, where the second message includes the second SSB index set.

In some possible implementations, the second message is a system message, and the satellite base station broadcasts the system message to the terminal.

S906: The terminal determines a first SSB index, and measures an SSB corresponding to the first SSB index.

If the second message received by the terminal includes the first offset value or the second SSB index set, the terminal may determine the first SSB index, and measure the SSB corresponding to the first SSB index.

In some possible implementations, the second message received by the terminal includes the first offset value, and the terminal determines whether an earth beam position in which the terminal is located is an edge earth beam position within the coverage area of the serving satellite. For example, the terminal may calculate a distance between the terminal and the satellite or an elevation angle of the terminal based on position information of the terminal and ephemeris information received from the satellite base station. If the distance is greater than a specific threshold or the elevation angle is less than a specific threshold, the terminal may determine that the earth beam position in which the terminal is located is at the edge earth beam position within the coverage area of the serving satellite.

If the terminal determines that the earth beam position in which the terminal is located is at the edge earth beam position within the coverage area of the serving satellite, the terminal determines the first SSB index, where the first SSB index is a neighboring-satellite SSB index corresponding to an index of the earth beam position in which the terminal is located. For example, the first SSB index is equal to a serving-satellite SSB index corresponding to the index of the beam position in which the terminal is located minus the first offset value, or the first SSB index is equal to a sum of the first offset value and the serving-satellite SSB index corresponding to the index of the beam position in which the terminal is located. The terminal measures the SSB corresponding to the first SSB index.

In some possible implementations, the second message received by the terminal includes the first offset value, and the terminal determines the first SSB index, where the first SSB index is a neighboring-satellite SSB index corresponding to an index of an earth beam position in which the terminal is located. For example, the first SSB index is equal to a serving-satellite SSB index corresponding to the first beam position index minus the first offset value, or the first SSB index is equal to a sum of the first offset value and a serving-satellite SSB index corresponding to the first beam position index. The terminal measures the SSB corresponding to the first SSB index.

In some possible implementations, the second message received by the terminal includes the second SSB index set, the terminal determines that the first SSB index is an SSB index included in the second SSB index set, and the terminal measures the SSB corresponding to the first SSB index.

In the foregoing embodiment, the satellite platform determines the first SSB index set and the first offset value, or determines the first SSB index set and the second SSB index set based on the second offset value and the third offset value that are received from the ground operations control center, and sends a result to the satellite base station. The satellite base station sends the first offset value or the second SSB index set to the terminal, and the terminal measures the to-be-measured SSB of the neighboring satellite.

In the foregoing embodiment, the satellite platform determines the first SSB index set and the first offset value, or determines the first SSB index set and the second SSB index set, and sends the result to the satellite base station. The satellite base station does not need to know a calculation process of the satellite platform. In step S902, the sixth message may be exchanged between the ground operations control center and the satellite platform by using existing signaling or signaling different from the existing signaling. In step S904, the first message may be exchanged between the satellite platform and the satellite base station by using existing signaling or signaling different from the existing signaling. In step S905, the first offset value or the second SSB index set may be indicated between the satellite base station and the terminal by using existing parameters in the system message or parameters different from the existing parameters in the system message.

According to the method in the foregoing embodiment, SSB interference between the serving satellite and the neighboring satellite in an overlapping coverage area is avoided, and the terminal can accurately measure the to-be-measured SSB of the neighboring satellite, thereby improving measurement performance.

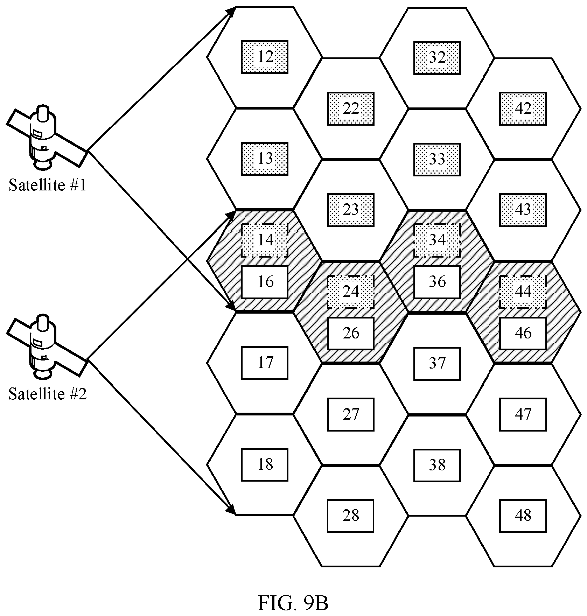

For example, FIG. 9B is a diagram in which there is no SSB interference between a serving satellite and a neighboring satellite in an overlapping area. Each hexagon represents an earth beam position, a number in the hexagon represents an SSB index, and a shaded hexagon represents an overlapping area between a satellite #1 and a satellite #2. It can be learned that SSB indexes of the satellite #1 and the satellite #2 in the overlapping area are different, and offset values of SSB indexes at a same beam position are both -2, thereby avoiding SSB interference. In addition, a terminal can further accurately measure a to-be-measured SSB of the neighboring satellite based on a received first offset value. For a terminal served by the satellite #2 and located in the overlapping area, only an SSB corresponding to the satellite #1 at an earth beam position in which the terminal is located needs to be measured. For example, for a terminal at an earth beam position covered by an SSB beam corresponding to SSB #16 of the satellite #2, the terminal determines, based on a first offset value equal to -2, to measure an SSB corresponding to SSB #14 of the satellite #1. For a terminal at an earth beam position covered by an SSB beam corresponding to SSB #26 of the satellite #2, the terminal determines, based on a first offset value equal to -2, to measure an SSB corresponding to SSB #24 of the satellite #1. The rest may be deduced by analogy.

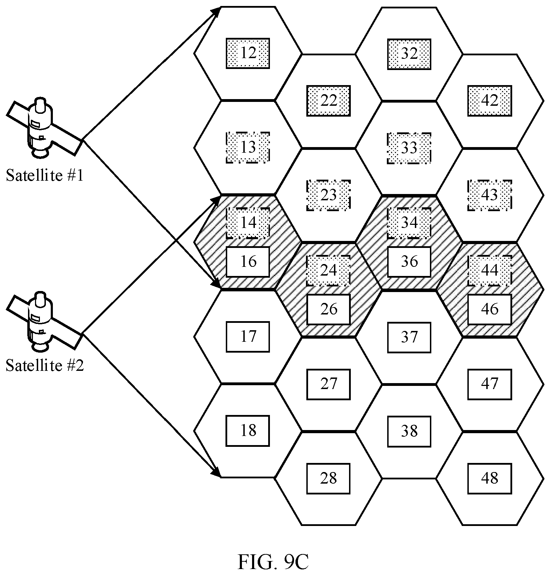

For example, FIG. 9C is a diagram in which there is no SSB interference between a serving satellite and a neighboring satellite in an overlapping area. Each hexagon represents an earth beam position, a number in the hexagon represents an SSB index, and a shaded hexagon represents an overlapping area between a satellite #1 and a satellite #2. It can be learned that SSB indexes of the satellite #1 and the satellite #2 in the overlapping area are different, and offset values of SSB indexes at a same beam position are both -2, thereby avoiding SSB interference. In addition, a terminal can further accurately measure a to-be-measured SSB of the neighboring satellite based on a received second SSB index set. For a terminal served by the satellite #2 and located in the overlapping area, an SSB corresponding to an earth beam position in which the terminal is located and an SSB corresponding to a neighboring beam position that are of the satellite #1 need to be measured. For example, for a terminal at an earth beam position covered by an SSB beam corresponding to SSB #26 of the satellite #2, a second SSB index set received by the terminal is {SSB #14, SSB #23, SSB #24, SSB #34}, and SSBs corresponding to SSB indexes included in the second SSB index set are to be measured. For a terminal at an earth beam position covered by an SSB beam corresponding to SSB #36 of the satellite #2, a second SSB index set received by the terminal is {SSB #23, SSB #24, SSB #33, SSB #34, SSB #43, SSB #44}, and SSBs corresponding to SSB indexes included in the second SSB index set are to be measured. The rest may be deduced by analogy.

It should be noted that some steps in the foregoing embodiment are not mandatory. That is, some steps are optional, and may be omitted or replaced with other steps. In addition, an execution sequence of the method steps is not limited in the foregoing embodiment.

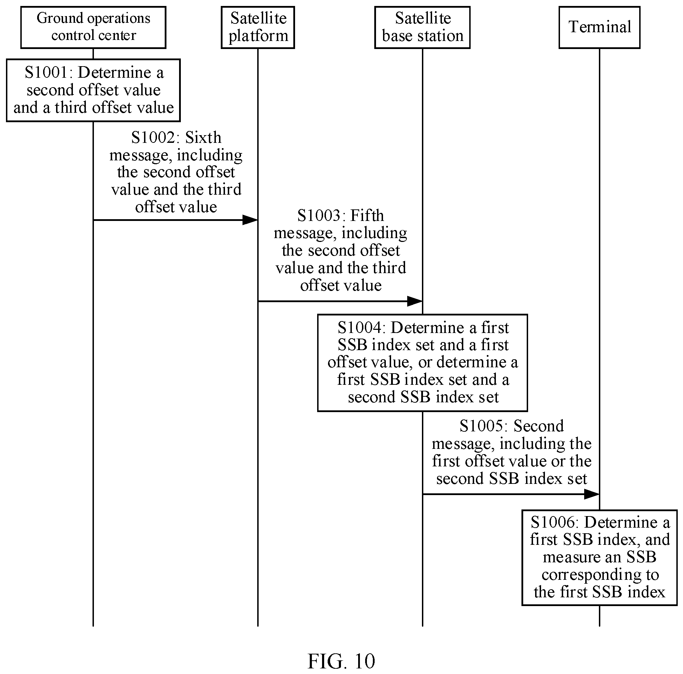

FIG. 10 is a schematic flowchart of a communication method (or may be referred to as an SSB configuration method) according to Embodiment 2 of this application. The method includes the following steps.

S1001: A ground operations control center determines a second offset value and a third offset value.

For details, refer to the descriptions of S901 in Embodiment 1.

S1002: The ground operations control center sends a sixth message to a satellite platform, where the sixth message includes the second offset value and the third offset value.

In some possible implementations, there is a link between the ground operations control center and the satellite platform for communication, and the ground operations control center sends the sixth message to the satellite platform over the link, where the sixth message includes the second offset value and the third offset value.

It may be understood that if there is no link between the ground operations control center and the satellite platform, the sixth message may be forwarded to the satellite platform over another link. A manner of interaction between the ground operations control center and the satellite platform is not limited in this embodiment of this application.

Optionally, the sixth message further includes a first rule index and/or a third parameter.

S1003: The satellite platform sends a fifth message to a satellite base station, where the fifth message includes the second offset value and the third offset value.

If the sixth message received by the satellite platform includes the second offset value and the third offset value, the satellite platform may send the fifth message to the satellite base station, where the fifth message includes the second offset value and the third offset value.

Optionally, if the sixth message received by the satellite platform further includes the first rule index and/or the third parameter, the satellite platform may send the fifth message to the satellite base station, where the fifth message further includes the first rule index and/or the third parameter.

In some possible implementations, there is a link between the satellite platform and the satellite base station for communication, and communication over the link may be wired communication or wireless communication. The satellite platform sends the fifth message to the satellite base station over the link.

It may be understood that, if there is no link between the satellite platform and the satellite base station, the fifth message may be forwarded to the satellite base station over another link. A manner of interaction between the satellite platform and the satellite base station is not limited in this embodiment of this application.

S1004: The satellite base station determines a first SSB index set and a first offset value, or determines a first SSB index set and a second SSB index set.

If the fifth message received by the satellite base station includes the second offset value and the third offset value, the satellite base station may determine the first SSB index set and the first offset value, or determine the first SSB index set and the second SSB index set.

In some possible implementations, the satellite base station determines the first SSB index set based on a predefined or preconfigured mapping rule, the predefined or preconfigured third parameter, and the predefined or preconfigured second offset value. The first SSB index set is a set of indexes of SSB beams covering earth beam positions corresponding to beam position indexes included in a first beam position index set, and the first beam position index set is a set of indexes of earth beam positions within a coverage area of a serving satellite. For details, refer to the example of S903 in Embodiment 1.

In some possible implementations, the satellite base station determines the first offset value based on the second offset value and the third offset value. For details, refer to the example of S903 in Embodiment 1.

In some possible implementations, the satellite base station determines the second SSB index set based on the predefined or preconfigured mapping rule, the predefined or preconfigured third parameter, and the predefined or preconfigured third offset value. The second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of a neighboring satellite, and the first beam position index is an index of an edge earth beam position within the coverage area of the serving satellite. For details, refer to the example of S903 in Embodiment 1.

Optionally, the fifth message received by the satellite base station includes the third parameter, the second offset value, and the third offset value.

In some possible implementations, the satellite base station determines the first SSB index set based on the predefined or preconfigured mapping rule, the predefined or preconfigured third parameter, and the predefined or preconfigured second offset value. For details, refer to the example of S903 in Embodiment 1.

In some possible implementations, the satellite base station determines the first offset value based on the second offset value and the third offset value. For details, refer to the example of S903 in Embodiment 1.

In some possible implementations, the satellite base station determines the second SSB index set based on the predefined or preconfigured mapping rule, the predefined or preconfigured third parameter, and the predefined or preconfigured third offset value. For details, refer to the example of S903 in Embodiment 1.

Optionally, the fifth message received by the satellite base station includes the second offset value, the third offset value, and the first rule index.

In some possible implementations, the satellite base station determines the first SSB index set based on the mapping rule indicated by the first rule index, the predefined or preconfigured third parameter, and the predefined or preconfigured second offset value. For details, refer to the example of S903 in Embodiment 1.

In some possible implementations, the satellite base station determines the first offset value based on the second offset value and the third offset value. For details, refer to the example of S903 in Embodiment 1.

In some possible implementations, the satellite base station determines the second SSB index set based on the mapping rule indicated by the first rule index, the predefined or preconfigured third parameter, and the predefined or preconfigured third offset value. For details, refer to the example of S903 in Embodiment 1.

Optionally, the fifth message received by the satellite base station includes the third parameter, the second offset value, the third offset value, and the first rule index.

In some possible implementations, the satellite base station determines the first SSB index set based on the mapping rule indicated by the first rule index, the third parameter, and the second offset value. For details, refer to the example of S903 in Embodiment 1.

In some possible implementations, the satellite base station determines the first offset value based on the second offset value and the third offset value. For details, refer to the example of S903 in Embodiment 1.

In some possible implementations, the satellite base station determines the second SSB index set based on the mapping rule indicated by the first rule index, the third parameter, and the third offset value. For details, refer to the example of S903 in Embodiment 1.

In some possible implementations, after determining the first SSB index set, the satellite base station may send the SSB beam corresponding to the SSB index included in the first SSB index set, to cover a corresponding earth beam position within the coverage area of the serving satellite.

S1005: The satellite base station sends a second message to a terminal, where the second message includes the first offset value or the second SSB index set.

After determining the first offset value or the second SSB index set, the satellite base station may send the second message to the terminal, where the second message includes the first offset value or the second SSB index set.

In some possible implementations, the satellite base station sends the second message to a terminal at an earth beam position within the coverage area of the serving satellite, where the second message includes the first offset value.

In some possible implementations, the satellite base station sends the second message to a terminal at an edge earth beam position within the coverage area of the serving satellite, where the second message includes the first offset value.

In some possible implementations, the satellite base station sends the second message to a terminal at an edge earth beam position within the coverage area of the serving satellite, where the second message includes the second SSB index set.

In some possible implementations, the second message is a system message, and the satellite base station broadcasts the system message to the terminal.

S1006: The terminal determines a first SSB index, and measures an SSB corresponding to the first SSB index.

For details, refer to the descriptions of S906 in Embodiment 1.

In the foregoing embodiment, the satellite platform sends, to the satellite base station, the second offset value and the third offset value that are received from the ground operations control center, and the satellite base station determines the first SSB index set and the first offset value, or determines the first SSB index set and the second SSB index set. The satellite base station sends the first offset value or the second SSB index set to the terminal, and the terminal measures the to-be-measured SSB of the neighboring satellite.

A main difference between the foregoing embodiment and Embodiment 1 is that network devices that determine the first SSB index set and the first offset value, or determine the first SSB index set and the second SSB index set are different. In Embodiment 1, the first SSB index set and the first offset value, or the first SSB index set and the second SSB index set are determined by the satellite platform, and in the foregoing embodiment, the first SSB index set and the first offset value, or the first SSB index set and the second SSB index set are determined by the satellite base station.

In step S1002 in the foregoing embodiment, the sixth message may be exchanged between the ground operations control center and the satellite platform by using existing signaling or signaling different from the existing signaling. In step S1003, the fifth message may be exchanged between the satellite platform and the satellite base station by using existing signaling or signaling different from the existing signaling. In step S1005, the first offset value or the second SSB index set may be indicated between the satellite base station and the terminal by using existing parameters in the system message or parameters different from the existing parameters in the system message.

According to the method in the foregoing embodiment, SSB interference between the serving satellite and the neighboring satellite in an overlapping coverage area is avoided, and the terminal can accurately measure the to-be-measured SSB of the neighboring satellite, thereby improving measurement performance. For an example of technical effects, refer to the descriptions of FIG. 9B and FIG. 9C in Embodiment 1.

It should be noted that some steps in the foregoing embodiment are not mandatory. That is, some steps are optional, and may be omitted or replaced with other steps. In addition, an execution sequence of the method steps is not limited in the foregoing embodiment.

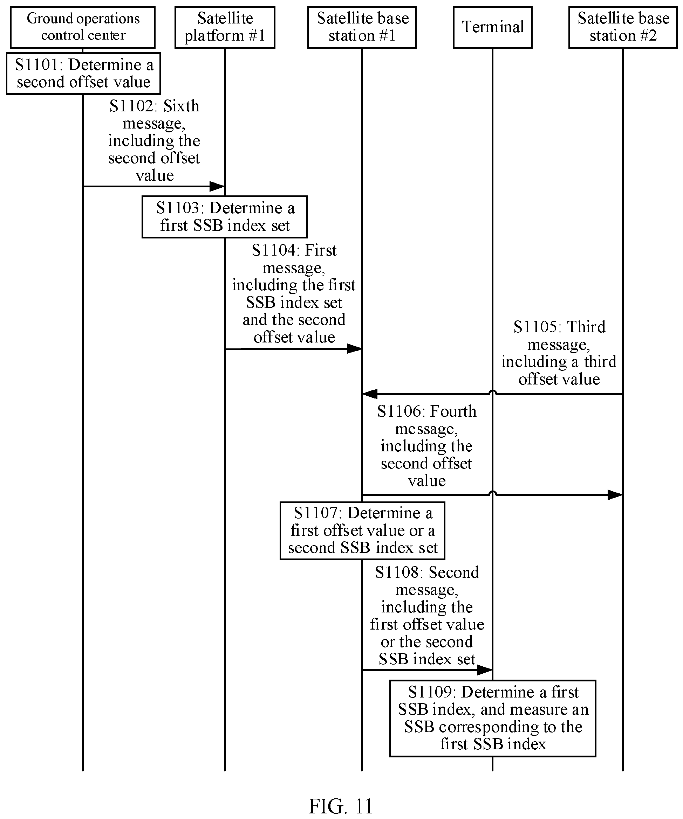

FIG. 11 is a schematic flowchart of a communication method (or may be referred to as an SSB configuration method) according to Embodiment 3 of this application. The method includes the following steps.

S1101: A ground operations control center determines a second offset value.

In some possible implementations, a mapping rule indicates a mapping relationship between an SSB index and a beam position index. M mapping rules may be predefined or preconfigured for the ground operations control center, a satellite platform, and a satellite base station. For example, the M mapping rules are defined in a protocol, where M is greater than or equal to 1. Optionally, when M is greater than 1, the ground operations control center further determines a first rule index, for indicating a determined mapping rule to the satellite platform or the satellite base station.

The second offset value is an offset value used for determining the SSB index according to the mapping rule, and is an offset value corresponding to a serving satellite.

A third parameter is used when the SSB index is calculated according to the mapping rule, and is associated with the mapping rule. Values of Q third parameters may be predefined or preconfigured for the ground operations control center, the satellite platform, and the satellite base station. For example, the values of the Q third parameters are defined in a protocol, where Q is greater than or equal to 1. Optionally, when Q is greater than 1, the ground operations control center further determines the values of the third parameters.

For an example of the mapping rule, refer to S901 in Embodiment 1.

S1102: The ground operations control center sends a sixth message to a satellite platform #1, where the sixth message includes the second offset value.

In some possible implementations, there is a link between the ground operations control center and the satellite platform #1 for communication, and the ground operations control center sends the sixth message to the satellite platform #1 over the link, where the sixth message includes the second offset value.

It may be understood that, if there is no link between the ground operations control center and the satellite platform #1, the sixth message may be forwarded to the satellite platform #1 over another link. A manner of interaction between the ground operations control center and the satellite platform #1 is not limited in this embodiment of this application.

Optionally, the sixth message further includes the first rule index and/or the third parameter.

S1103: The satellite platform #1 determines a first SSB index set.

If the sixth message received by the satellite platform #1 includes the second offset value, the satellite platform #1 may determine the first SSB index set.

In some possible implementations, the satellite platform #1 determines the first SSB index set based on the predefined or preconfigured mapping rule, the predefined or preconfigured third parameter, and the predefined or preconfigured second offset value. The first SSB index set is a set of indexes of SSB beams covering earth beam positions corresponding to beam position indexes included in a first beam position index set, and the first beam position index set is a set of indexes of earth beam positions within a coverage area of the serving satellite. For details, refer to the example of S903 in Embodiment 1.

Optionally, the sixth message received by the satellite platform #1 includes the third parameter and the second offset value.

In some possible implementations, the satellite platform #1 determines the first SSB index set based on the predefined or preconfigured mapping rule, the predefined or preconfigured third parameter, and the predefined or preconfigured second offset value. For details, refer to the example of S903 in Embodiment 1.

Optionally, the sixth message received by the satellite platform #1 includes the second offset value and the first rule index.

In some possible implementations, the satellite platform #1 determines the first SSB index set based on the mapping rule indicated by the first rule index, the predefined or preconfigured third parameter, and the predefined or preconfigured second offset value. For details, refer to the example of S903 in Embodiment 1.

Optionally, the sixth message received by the satellite platform #1 includes the third parameter, the second offset value, and the first rule index.

In some possible implementations, the satellite platform #1 determines the first SSB index set based on the mapping rule indicated by the first rule index, the third parameter, and the second offset value. For details, refer to the example of S903 in Embodiment 1.

S1104: The satellite platform #1 sends a first message to a satellite base station #1, where the first message includes the first SSB index set and the second offset value.

In some possible implementations, there is a link between the satellite platform #1 and the satellite base station #1 for communication, and communication over the link may be wired communication or wireless communication. The satellite platform #1 sends the first message to the satellite base station #1 over the link, where the first message includes the first SSB index set and the second offset value.

Optionally, the first message further includes the first rule index and/or the third parameter.

It may be understood that, if there is no link between the satellite platform #1 and the satellite base station #1, the first message may be forwarded to the satellite base station #1 over another link. A manner of interaction between the satellite platform #1 and the satellite base station #1 is not limited in this embodiment of this application.

In some possible implementations, after obtaining the first SSB index set, the satellite base station #1 may send the SSB beam corresponding to the SSB index included in the first SSB index set, to cover a corresponding earth beam position within the coverage area of the serving satellite.

S1105: The satellite base station #1 receives a third message sent by a satellite base station #2, where the third message includes a third offset value.

In some possible implementations, a satellite #2 is a neighboring satellite of a satellite #1, and there is an Xn interface between the satellite base station #1 and the satellite base station #2. The satellite base station #1 may receive, via the Xn interface, the third message sent by the satellite base station #2, where the third message includes the third offset value, and the third offset value is an offset value corresponding to the satellite #2.

It may be understood that, in this embodiment of this application, the Xn interface is used as an example to describe an interface between satellite base stations. A name of the interface is not limited in this embodiment of this application.

S1106: The satellite base station #1 sends a fourth message to the satellite base station #2, where the fourth message includes the second offset value.

If the first message received by the satellite base station #1 includes the first SSB index set and the second offset value, the satellite base station #1 may send the fourth message to the satellite base station #2, where the fourth message includes the second offset value.

In some possible implementations, the satellite #2 is the neighboring satellite of the satellite #1, and there is the Xn interface between the satellite base station #1 and the satellite base station #2. The satellite base station #1 may send the fourth message to the satellite base station #2 via the Xn interface.

It may be understood that, in this embodiment of this application, the Xn interface is used as an example to describe an interface between satellite base stations. A name of the interface is not limited in this embodiment of this application.

S1107: The satellite base station #1 determines a first offset value or a second SSB index set.

If the third message received by the satellite base station #1 includes the third offset value, and the first message received by the satellite base station #1 includes the first SSB index set and the second offset value, the satellite base station #1 may determine the first offset value or the second SSB index set.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the predefined or preconfigured mapping rule, the predefined or preconfigured third parameter, and the predefined or preconfigured third offset value. The second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of a neighboring satellite, and the first beam position index is an index of an edge earth beam position within the coverage area of the serving satellite. For details, refer to the example of S903 in Embodiment 1.

Optionally, the first message received by the satellite base station #1 includes the first SSB index set, the second offset value, and the third parameter.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the predefined or preconfigured mapping rule, the predefined or preconfigured third parameter, and the predefined or preconfigured third offset value. For details, refer to the example of S903 in Embodiment 1.

Optionally, the first message received by the satellite base station #1 includes the first SSB index set, the second offset value, and the first rule index.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the mapping rule indicated by the first rule index, the predefined or preconfigured third parameter, and the predefined or preconfigured third offset value. For details, refer to the example of S903 in Embodiment 1.

Optionally, the first message received by the satellite base station #1 includes the first SSB index set, the second offset value, the third parameter, and the first rule index.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the mapping rule indicated by the first rule index, the third parameter, and the third offset value. For details, refer to the example of S903 in Embodiment 1.

S1108: The satellite base station #1 sends a second message to a terminal, where the second message includes the first offset value or the second SSB index set.

After determining the first offset value or the second SSB index set, the satellite base station #1 may send the second message to the terminal, where the second message includes the first offset value or the second SSB index set.

In some possible implementations, the satellite base station #1 sends the second message to a terminal at an earth beam position within the coverage area of the serving satellite, where the second message includes the first offset value.

In some possible implementations, the satellite base station #1 sends the second message to a terminal at an edge earth beam position within the coverage area of the serving satellite, where the second message includes the first offset value.

In some possible implementations, the satellite base station #1 sends the second message to a terminal at an edge earth beam position within the coverage area of the serving satellite, where the second message includes the second SSB index set.

In some possible implementations, the second message is a system message, and the satellite base station #1 broadcasts the system message to the terminal.

S1109: The terminal determines a first SSB index, and measures an SSB corresponding to the first SSB index.

For details, refer to the descriptions of S906 in Embodiment 1.

In the foregoing embodiment, the satellite platform #1 determines the first SSB index set based on the second offset value received from the ground operations control center, and then sends the first SSB index set and the second offset value to the satellite base station #1. The satellite base station #1 obtains the third offset value of the satellite base station #2 through interaction via the Xn interface between the base stations, and then determines the first offset value or the second SSB index set. The satellite base station #1 sends the first offset value or the second SSB index set to the terminal, and the terminal measures the to-be-measured SSB of the neighboring satellite.

Main differences between the foregoing embodiment and Embodiment 1 include: (1) Network devices that determine the first offset value or the second SSB index set are different. In Embodiment 1, the first offset value or the second SSB index set is determined by the satellite platform, and in the foregoing embodiment, the first offset value or the second SSB index set is determined by the satellite base station. (2) The sixth message includes different content. In Embodiment 1, the sixth message includes the second offset value and the third offset value. In the foregoing embodiment, the sixth message includes the second offset value but does not include the third offset value, and the third offset value needs to be obtained through interaction via the Xn interface.

Main differences between the foregoing embodiment and Embodiment 2 include: (1) Network devices that determine the first SSB index set are different. In Embodiment 2, the first SSB index set is determined by the satellite base station, and in the foregoing embodiment, the first SSB index set is determined by the satellite platform. (2) The sixth message includes different content. In Embodiment 1, the sixth message includes the second offset value and the third offset value. In the foregoing embodiment, the sixth message includes the second offset value but does not include the third offset value, and the third offset value needs to be obtained through interaction via the Xn interface.

In step S1102 in the foregoing embodiment, the sixth message may be exchanged between the ground operations control center and the satellite platform #1 by using existing signaling or signaling different from the existing signaling. In step S1104, the first message may be exchanged between the satellite platform #1 and the satellite base station #1 by using existing signaling or signaling different from the existing signaling. In step S1105 and step S1106, the offset values corresponding to respective satellites may be indicated between the satellite base station #1 and the satellite base station #2 by using existing parameters of the Xn interface or parameters different from the existing parameters of the Xn interface. In step S1108, the first offset value or the second SSB index set may be indicated between the satellite base station #1 and the terminal by using existing parameters in the system message or parameters different from the existing parameters in the system message.

According to the method in the foregoing embodiment, SSB interference between the serving satellite and the neighboring satellite in an overlapping coverage area is avoided, and the terminal can accurately measure the to-be-measured SSB of the neighboring satellite, thereby improving measurement performance. For an example of technical effects, refer to the descriptions of FIG. 9B and FIG. 9C in Embodiment 1.

It should be noted that some steps in the foregoing embodiment are not mandatory. That is, some steps are optional, and may be omitted or replaced with other steps. In addition, an execution sequence of the method steps is not limited in the foregoing embodiment.

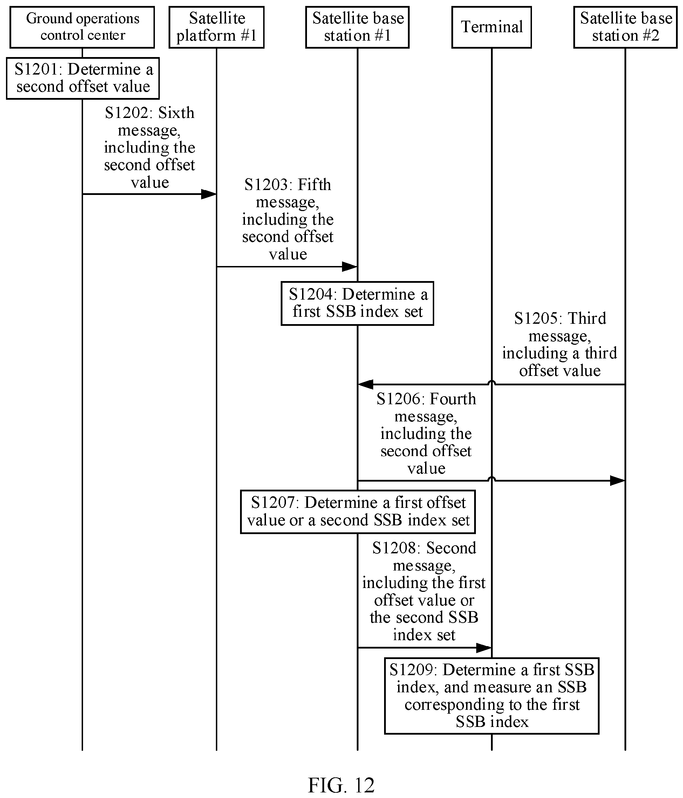

FIG. 12 is a schematic flowchart of a communication method (or may be referred to as an SSB configuration method) according to Embodiment 4 of this application. The method includes the following steps.

S1201: A ground operations control center determines a second offset value.

For details, refer to S1101 in Embodiment 3.

S1202: The ground operations control center sends a sixth message to a satellite platform #1, where the sixth message includes the second offset value.

In some possible implementations, there is a link between the ground operations control center and the satellite platform #1 for communication, and the ground operations control center sends the sixth message to the satellite platform #1 over the link, where the sixth message includes the second offset value.

It may be understood that, if there is no link between the ground operations control center and the satellite platform #1, the sixth message may be forwarded to the satellite platform #1 over another link. A manner of interaction between the ground operations control center and the satellite platform #1 is not limited in this embodiment of this application.

Optionally, the sixth message further includes a first rule index and/or a third parameter.

S1203: The satellite platform #1 sends a fifth message to a satellite base station #1, where the fifth message includes the second offset value.

If the sixth message received by the satellite platform #1 includes the second offset value, the satellite platform #1 may send the fifth message to the satellite base station #1, where the fifth message includes the second offset value.

Optionally, if the sixth message received by the satellite platform #1 further includes the first rule index and/or the third parameter, the satellite platform #1 may send the fifth message to the satellite base station #1, where the fifth message further includes the first rule index and/or the third parameter.

In some possible implementations, there is a link between the satellite platform #1 and the satellite base station #1 for communication, and communication over the link may be wired communication or wireless communication. The satellite platform #1 sends the fifth message to the satellite base station #1 over the link.

It may be understood that, if there is no link between the satellite platform #1 and the satellite base station #1, the fifth message may be forwarded to the satellite base station #1 over another link. A manner of interaction between the satellite platform #1 and the satellite base station #1 is not limited in this embodiment of this application.

S1204: The satellite base station #1 determines a first SSB index set.

If the fifth message received by the satellite base station #1 includes the second offset value, the satellite base station #1 may determine the first SSB index set.

In some possible implementations, the satellite base station #1 determines the first SSB index set based on a predefined or preconfigured mapping rule, the predefined or preconfigured third parameter, and the predefined or preconfigured second offset value. The first SSB index set is a set of indexes of SSB beams covering earth beam positions corresponding to beam position indexes included in a first beam position index set, and the first beam position index set is a set of indexes of earth beam positions within a coverage area of a serving satellite. For details, refer to the example of S903 in Embodiment 1.

Optionally, the fifth message received by the satellite base station #1 includes the third parameter and the second offset value.

In some possible implementations, the satellite base station #1 determines the first SSB index set based on the predefined or preconfigured mapping rule, the predefined or preconfigured third parameter, and the predefined or preconfigured second offset value. For details, refer to the example of S903 in Embodiment 1.

Optionally, the fifth message received by the satellite base station #1 includes the second offset value and the first rule index.

In some possible implementations, the satellite base station #1 determines the first SSB index set based on a mapping rule indicated by the first rule index, the predefined or preconfigured third parameter, and the predefined or preconfigured second offset value. For details, refer to the example of S903 in Embodiment 1.

Optionally, the fifth message received by the satellite base station #1 includes the third parameter, the second offset value, and the first rule index.

In some possible implementations, the satellite base station #1 determines the first SSB index set based on the mapping rule indicated by the first rule index, the third parameter, and the second offset value. For details, refer to the example of S903 in Embodiment 1.

In some possible implementations, after determining the first SSB index set, the satellite base station #1 may send the SSB beam corresponding to the SSB index included in the first SSB index set, to cover a corresponding earth beam position within the coverage area of the serving satellite.

S1205: The satellite base station #1 receives a third message sent by a satellite base station #2, where the third message includes a third offset value.

In some possible implementations, a satellite #2 is a neighboring satellite of a satellite #1, and there is an Xn interface between the satellite base station #1 and the satellite base station #2. The satellite base station #1 may receive, via the Xn interface, the third message sent by the satellite base station #2, where the third message includes the third offset value, and the third offset value is an offset value corresponding to the satellite #2.

It may be understood that, in this embodiment of this application, the Xn interface is used as an example to describe an interface between satellite base stations. A name of the interface is not limited in this embodiment of this application.

S1206: The satellite base station #1 sends a fourth message to the satellite base station #2, where the fourth message includes the second offset value.

If the fifth message received by the satellite base station #1 includes the second offset value, the satellite base station #1 may send the fourth message to the satellite base station #2, where the fourth message includes the second offset value.

In some possible implementations, a satellite #2 is a neighboring satellite of a satellite #1, and there is an Xn interface between the satellite base station #1 and the satellite base station #2. The satellite base station #1 may send the fourth message to the satellite base station #2 via the Xn interface.

It may be understood that, in this embodiment of this application, the Xn interface is used as an example to describe an interface between satellite base stations. A name of the interface is not limited in this embodiment of this application.

S1207: The satellite base station #1 determines a first offset value or a second SSB index set.

If the third message received by the satellite base station #1 includes the third offset value, and the fifth message received by the satellite base station #1 includes the second offset value, the satellite base station #1 may determine the first offset value or the second SSB index set.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the predefined or preconfigured mapping rule, the predefined or preconfigured third parameter, and the predefined or preconfigured third offset value. The second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of a neighboring satellite, and the first beam position index is an index of an edge earth beam position within the coverage area of the serving satellite. For details, refer to the example of S903 in Embodiment 1.

Optionally, the fifth message received by the satellite base station #1 includes the second offset value and the third parameter.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the predefined or preconfigured mapping rule, the predefined or preconfigured third parameter, and the predefined or preconfigured third offset value. For details, refer to the example of S903 in Embodiment 1.

Optionally, the fifth message received by the satellite base station #1 includes the second offset value and the first rule index.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the mapping rule indicated by the first rule index, the predefined or preconfigured third parameter, and the predefined or preconfigured third offset value. For details, refer to the example of S903 in Embodiment 1.

Optionally, the fifth message received by the satellite base station #1 includes the second offset value, the third parameter, and the first rule index.

In some possible implementations, the satellite base station #1 determines the first offset value based on the second offset value and the third offset value. For details, refer to the example of S903 in Embodiment 1.

In some possible implementations, the satellite base station #1 determines the second SSB index set based on the mapping rule indicated by the first rule index, the third parameter, and the third offset value. For details, refer to the example of S903 in Embodiment 1.

S1208: The satellite base station #1 sends a second message to a terminal, where the second message includes the first offset value or the second SSB index set.

For details, refer to the descriptions of S1108 in Embodiment 3.

S1209: The terminal determines a first SSB index, and measures an SSB corresponding to the first SSB index.

For details, refer to the descriptions of S1109 in Embodiment 3.

In the foregoing embodiment, the satellite platform #1 sends, to the satellite base station #1, the second offset value received from the ground operations control center, and the satellite base station #1 determines the first SSB index set. The satellite base station #1 obtains the third offset value of the satellite base station #2 through interaction via the Xn interface between the base stations, and then determines the first offset value or the second SSB index set. The satellite base station #1 sends the first offset value or the second SSB index set to the terminal, and the terminal measures the to-be-measured SSB of the neighboring satellite.

Main differences between the foregoing embodiment and Embodiment 1 include: (1) Network devices that determine the first SSB index set and the first offset value, or determine the first SSB index set and the second SSB index set are different. In Embodiment 1, the first SSB index set and the first offset value, or the first SSB index set and the second SSB index set are determined by the satellite platform, and in the foregoing embodiment, the first SSB index set and the first offset value, or the first SSB index set and the second SSB index set are determined by the satellite base station. (2) The sixth message includes different content. In Embodiment 1, the sixth message includes the second offset value and the third offset value. In the foregoing embodiment, the sixth message includes the second offset value but does not include the third offset value, and the third offset value needs to be obtained through interaction via the Xn interface.

A main difference between the foregoing embodiment and Embodiment 2 is that the sixth message includes different content. In Embodiment 2, the sixth message includes the second offset value and the third offset value. In the foregoing embodiment, the sixth message includes the second offset value but does not include the third offset value, and the third offset value needs to be obtained through interaction via the Xn interface.

A main difference between the foregoing embodiment and Embodiment 3 is that network devices that determine the first SSB index set are different. In Embodiment 3, the first SSB index set is determined by the satellite platform. In the foregoing embodiment, the first SSB index set is determined by the satellite base station.

In step S1202 in the foregoing embodiment, the sixth message may be exchanged between the ground operations control center and the satellite platform #1 by using existing signaling or signaling different from the existing signaling. In step S1203, the fifth message may be exchanged between the satellite platform #1 and the satellite base station #1 by using existing signaling or signaling different from the existing signaling. In step S1205 and step S1206, the offset values corresponding to respective satellites may be indicated between the satellite base station #1 and the satellite base station #2 by using existing parameters of the Xn interface or parameters different from the existing parameters of the Xn interface. In step S1208, the first offset value or the second SSB index set may be indicated between the satellite base station and the terminal by using existing parameters in a system message or parameters different from the existing parameters in the system message.

According to the method in the foregoing embodiment, SSB interference between the serving satellite and the neighboring satellite in an overlapping coverage area is avoided, and the terminal can accurately measure the to-be-measured SSB of the neighboring satellite, thereby improving measurement performance. For an example of technical effects, refer to the descriptions of FIG. 9B and FIG. 9C in Embodiment 1.

It should be noted that some steps in the foregoing embodiment are not mandatory. That is, some steps are optional, and may be omitted or replaced with other steps. In addition, an execution sequence of the method steps is not limited in the foregoing embodiment.

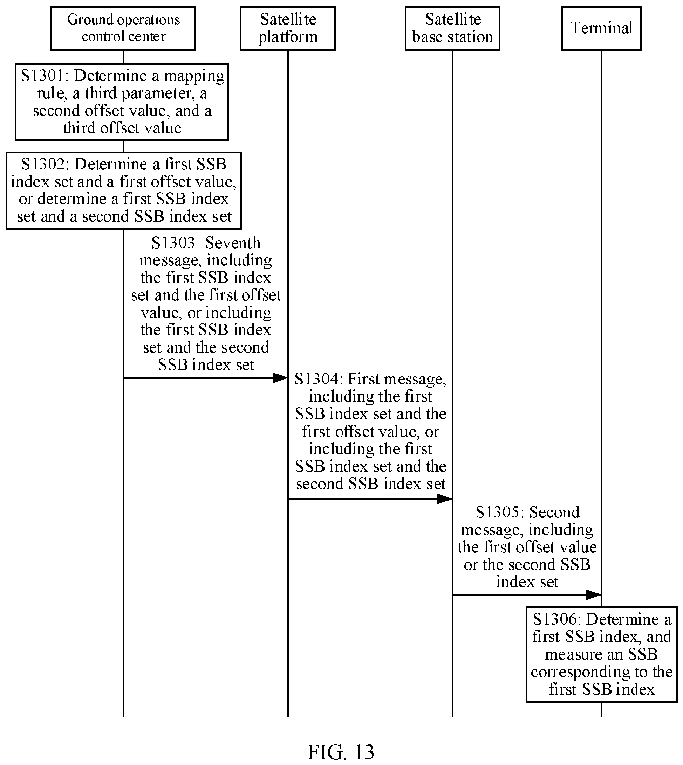

FIG. 13 is a schematic flowchart of a communication method (or may be referred to as an SSB configuration method) according to Embodiment 5 of this application. The method includes the following steps.

S1301: A ground operations control center determines a second offset value and a third offset value.

In some possible implementations, a mapping rule indicates a mapping relationship between an SSB index and a beam position index. M mapping rules may be predefined or preconfigured for the ground operations control center, a satellite platform, and a satellite base station. For example, the M mapping rules are defined in a protocol, where M is greater than or equal to 1. Optionally, when M is greater than 1, the ground operations control center further determines a first rule index.

The second offset value and the third offset value are both used for determining the SSB index according to the mapping rule. The second offset value is an offset value corresponding to a serving satellite, and the third offset value is an offset value corresponding to a neighboring satellite.

A third parameter is used when the SSB index is calculated according to the mapping rule, and is associated with the mapping rule. Values of Q third parameters may be predefined or preconfigured for the ground operations control center, the satellite platform, and the satellite base station. For example, the values of the Q third parameters are defined in a protocol, where Q is greater than or equal to 1. Optionally, when Q is greater than 1, the ground operations control center further determines the values of the third parameters.

For details, refer to the example of S901 in Embodiment 1.

S1302: The ground operations control center determines a first SSB index set and a first offset value, or determines a first SSB index set and a second SSB index set.

Based on the determined mapping rule, the third parameter, the second offset value, and the third offset value, the ground operations control center may determine the first SSB index set and the first offset value, or determine the first SSB index set and the second SSB index set.

In some possible implementations, the ground operations control center determines the first SSB index set based on the mapping rule, the third parameter, and the second offset value. The first SSB index set is a set of indexes of SSB beams covering earth beam positions corresponding to beam position indexes included in a first beam position index set, and the first beam position index set is a set of indexes of earth beam positions within a coverage area of a serving satellite. For details, refer to the example of S903 in Embodiment 1.

In some possible implementations, the ground operations control center determines the first offset value based on the second offset value and the third offset value. For details, refer to the example of S903 in Embodiment 1.

In some possible implementations, the ground operations control center determines the second SSB index set based on the mapping rule, the third parameter, and the third offset value. The second SSB index set is a set of indexes of SSB beams covering earth beam positions corresponding to beam position indexes included in a second beam position index set, the second beam position index set includes an index of an earth beam position that is adjacent to or overlaps with an earth beam position corresponding to a first beam position index and that is within a coverage area of a neighboring satellite, and the first beam position index is an index of an edge earth beam position within the coverage area of the serving satellite. For details, refer to the example of S903 in Embodiment 1.

S1303: The ground operations control center sends a seventh message to the satellite platform, where the seventh message includes the first SSB index set and the first offset value, or includes the first SSB index set and the second SSB index set.

In some possible implementations, there is a link between the ground operations control center and the satellite platform for communication, and the ground operations control center sends the seventh message to the satellite platform over the link, where the seventh message includes the first SSB index set and the first offset value, or includes the first SSB index set and the second SSB index set.

It may be understood that if there is no link between the ground operations control center and the satellite platform, the seventh message may be forwarded to the satellite platform over another link. A manner of interaction between the ground operations control center and the satellite platform is not limited in this embodiment of this application.

S1304: The satellite platform sends a first message to the satellite base station, where the first message includes the first SSB index set and the first offset value, or includes the first SSB index set and the second SSB index set.

If the seventh message received by the satellite platform includes the first SSB index set and the first offset value, or includes the first SSB index set and the second SSB index set, the satellite platform may send the first message to the satellite base station, where the first message includes the first SSB index set and the first offset value, or includes the first SSB index set and the second SSB index set.

In some possible implementations, there is a link between the satellite platform and the satellite base station for communication, and communication over the link may be wired communication or wireless communication. The satellite platform sends the first message to the satellite base station over the link.

It may be understood that, if there is no link between the satellite platform and the satellite base station, the first message may be forwarded to the satellite base station over another link. A manner of interaction between the satellite platform and the satellite base station is not limited in this embodiment of this application.

In some possible implementations, after obtaining the first SSB index set, the satellite base station may send the SSB beam corresponding to the SSB index included in the first SSB index set, to cover a corresponding earth beam position within the coverage area of the serving satellite.

S1305: The satellite base station sends a second message to a terminal, where the second message includes the first offset value or the second SSB index set.

For details, refer to the descriptions of S905 in Embodiment 1.

S1306: The terminal determines a first SSB index, and measures an SSB corresponding to the first SSB index.

For details, refer to the descriptions of S906 in Embodiment 1.

In the foregoing embodiment, the ground operations control center determines the first SSB index set and the first offset value, or determines the first SSB index set and the second SSB index set, and sends a result to the satellite platform, and the satellite platform sends the result to the satellite base station. The satellite base station sends the first offset value or the second SSB index set to the terminal, and the terminal measures the to-be-measured SSB of the neighboring satellite.

A main difference between the foregoing embodiment and Embodiment 1, Embodiment 2, Embodiment 3, or Embodiment 4 is that network devices that determine the first SSB index set and the first offset value, or determine the first SSB index set and the second SSB index set are different. In the foregoing Embodiment 1, Embodiment 2, Embodiment 3, or Embodiment 4, the first SSB index set and the first offset value, or the first SSB index set and the second SSB index set are determined by the satellite platform or the satellite base station, and in the foregoing embodiment, the first SSB index set and the first offset value, or the first SSB index set and the second SSB index set are determined by the ground operations control center.

In step S1303 in the foregoing embodiment, the seventh message may be exchanged between the ground operations control center and the satellite platform by using existing signaling or signaling different from the existing signaling. In step S1304, the first message may be exchanged between the satellite platform and the satellite base station by using existing signaling or signaling different from the existing signaling. In step S1305, the first offset value or the second SSB index set may be indicated between the satellite base station and the terminal by using existing parameters in a system message or parameters different from the existing parameters in the system message.

According to the method in the foregoing embodiment, SSB interference between the serving satellite and the neighboring satellite in an overlapping coverage area is avoided, and the terminal can accurately measure the to-be-measured SSB of the neighboring satellite, thereby improving measurement performance. For an example of technical effects, refer to the descriptions of FIG. 9B and FIG. 9C in Embodiment 1.

It should be noted that some steps in the foregoing embodiment are not mandatory. That is, some steps are optional, and may be omitted or replaced with other steps. In addition, an execution sequence of the method steps is not limited in the foregoing embodiment.

It should be noted that, in the foregoing method embodiments, a method, a procedure, or a function implemented by the terminal may also be implemented by a component (for example, a chip, a chip system, or a circuit) applicable to the terminal.

It should be noted that, in the foregoing method embodiments, a method, a procedure, or a function implemented by the satellite base station may also be implemented by a component (for example, a chip, a chip system, or a circuit) applicable to the satellite base station.

It should be noted that, in the foregoing method embodiments, a method, a procedure, or a function implemented by the satellite platform may also be implemented by a component (for example, a chip, a chip system, or a circuit) applicable to the satellite platform.

It should be noted that, in the foregoing method embodiments, a method, a procedure, or a function implemented by the ground operations control center may also be implemented by a component (for example, a chip, a chip system, or a circuit) applicable to the ground operations control center.

Based on a same concept as the foregoing SSB configuration methods, this application further provides the following communication apparatuses.

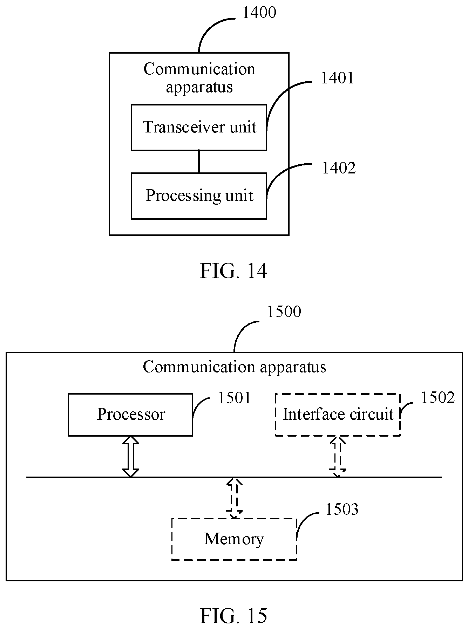

FIG. 14 is a diagram of a structure of a communication apparatus according to an embodiment of this application. The communication apparatus 1400 includes a transceiver unit 1401 and a processing unit 1402.

When the communication apparatus is configured to implement the function of the satellite base station in embodiments of this application, the transceiver unit 1401 is configured to perform the operations of the satellite base station in S904 and S905 in the embodiment shown in FIG. 9A; or the transceiver unit 1401 is configured to perform the operations of the satellite base station in S1003 and S1005 in the embodiment shown in FIG. 10, and the processing unit 1402 is configured to perform the operations of the satellite base station in S1004 in the embodiment shown in FIG. 10; or the transceiver unit 1401 is configured to perform the operations of the satellite base station #1 in S1104, S1105, S1106, and S1108 in the embodiment shown in FIG. 11, and the processing unit 1402 is configured to perform the operations of the satellite base station #1 in S1107 in the embodiment shown in FIG. 11; or the transceiver unit 1401 is configured to perform the operations of the satellite base station #1 in S1203, S1205, S1206, and S1208 in the embodiment shown in FIG. 12, and the processing unit 1402 is configured to perform the operations of the satellite base station #1 in S1204 and S1207 in the embodiment shown in FIG. 12; or the transceiver unit 1401 is configured to perform the operations of the satellite base station in S1304 and S1305 in the embodiment shown in FIG. 13.

When the communication apparatus is configured to implement the function of the satellite platform in embodiments of this application, the transceiver unit 1401 is configured to perform the operations of the satellite platform in S902 and S904 in the embodiment shown in FIG. 9A, and the processing unit 1402 is configured to perform the operations of the satellite platform in S903 in the embodiment shown in FIG. 9A; or the transceiver unit 1401 is configured to perform the operations of the satellite platform in S1002 and S1003 in the embodiment shown in FIG. 10; or the transceiver unit 1401 is configured to perform the operations of the satellite platform #1 in S1102 and S1104 in the embodiment shown in FIG. 11, and the processing unit 1402 is configured to perform the operations of the satellite platform #1 in S1103 in the embodiment shown in FIG. 11; or the transceiver unit 1401 is configured to perform the operations of the satellite platform #1 in S1202 and S1203 in the embodiment shown in FIG. 12; or the transceiver unit 1401 is configured to perform the operations of the satellite platform #1 in S1303 and S1304 in the embodiment shown in FIG. 13.

When the communication apparatus is configured to implement the function of the ground operations control center in embodiments of this application, the transceiver unit 1401 is configured to perform the operations of the ground operations control center in S902 in the embodiment shown in FIG. 9A, and the processing unit 1402 is configured to perform the operations of the ground operations control center in S901 in the embodiment shown in FIG. 9A; or the transceiver unit 1401 is configured to perform the operations of the ground operations control center in S1002 in the embodiment shown in FIG. 10, and the processing unit 1402 is configured to perform the operations of the ground operations control center in S1001 in the embodiment shown in FIG. 10; or the transceiver unit 1401 is configured to perform the operations of the ground operations control center in S1102 in the embodiment shown in FIG. 11, and the processing unit 1402 is configured to perform the operations of the ground operations control center in S1101 in the embodiment shown in FIG. 11; or the transceiver unit 1401 is configured to perform the operations of the ground operations control center in S1202 in the embodiment shown in FIG. 12, and the processing unit 1402 is configured to perform the operations of the ground operations control center in S1201 in the embodiment shown in FIG. 12; or the transceiver unit 1401 is configured to perform the operations of the ground operations control center in S1303 in the embodiment shown in FIG. 13, and the processing unit 1402 is configured to perform the operations of the ground operations control center in S1301 and S1302 in the embodiment shown in FIG. 13.

When the communication apparatus is configured to implement the function of the terminal in embodiments of this application, the transceiver unit 1401 is configured to perform the operations of the terminal in S905 in the embodiment shown in FIG. 9A, and the processing unit 1402 is configured to perform the operations of the terminal in S906 in the embodiment shown in FIG. 9A; or the transceiver unit 1401 is configured to perform the operations of the terminal in S1005 in the embodiment shown in FIG. 10, and the processing unit 1402 is configured to perform the operations of the terminal in S1006 in the embodiment shown in FIG. 10; or the transceiver unit 1401 is configured to perform the operations of the terminal in S1108 in the embodiment shown in FIG. 11, and the processing unit 1402 is configured to perform the operations of the terminal in S1109 in the embodiment shown in FIG. 11; or the transceiver unit 1401 is configured to perform the operations of the terminal in S1208 in the embodiment shown in FIG. 12, and the processing unit 1402 is configured to perform the operations of the terminal in S1209 in the embodiment shown in FIG. 12; or the transceiver unit 1401 is configured to perform the operations of the terminal in S1305 in the embodiment shown in FIG. 13, and the processing unit 1402 is configured to perform the operations of the terminal in S1306 in the embodiment shown in FIG. 13.

For specific implementations of the transceiver unit 1401 and the processing unit 1402, refer to the descriptions in the foregoing embodiments of this application.

FIG. 15 is a diagram of a structure of another communication apparatus according to an embodiment of this application. The communication apparatus 1500 includes one or more processors 1501 (one processor is shown as an example in the figure). Optionally, the communication apparatus 1500 may further include a memory 1503 (represented by dashed lines in the figure). The memory 1503 is configured to: store instructions executed by the processor 1501, or store input data required by the processor 1501 to run the instructions, or store data generated after the processor 1501 runs the instructions. Optionally, the communication apparatus 1500 may further include an interface circuit 1502 (represented by dashed lines in the figure), and the processor 1501 and the interface circuit 1502 are coupled to each other. It may be understood that the interface circuit 1502 may be a transceiver or an input/output interface. The processor 1501 is configured to implement a function of the processing unit 1402 in the embodiment shown in FIG. 14, and the interface circuit 1502 is configured to implement a function of the transceiver unit 1401 in the embodiment shown in FIG. 14.

When the communication apparatus is a chip used in a satellite base station, the chip implements a function of the satellite base station in the foregoing method embodiments. The chip receives information from another module (for example, a radio frequency module or an antenna) in the satellite base station, where the information is sent by a satellite platform, a terminal, or a satellite base station of a neighboring satellite to the satellite base station; or the chip sends information to another module (for example, a radio frequency module or an antenna) in the satellite base station, where the information is sent by the satellite base station to a satellite platform, a terminal, or a satellite base station of a neighboring satellite.

When the communication apparatus is a chip used in a satellite platform, the chip implements a function of the satellite platform in the foregoing method embodiments. The chip receives information from another module (for example, a radio frequency module or an antenna) in the satellite platform, where the information is sent by a ground operations control center or a satellite base station to the satellite platform; or the chip sends information to another module (for example, a radio frequency module or an antenna) in the satellite platform, where the information is sent by the satellite platform to a ground operations control center or a satellite base station.

When the communication apparatus is a chip used in a ground operations control center, the chip implements a function of the ground operations control center in the foregoing method embodiments. The chip receives information from another module (for example, a radio frequency module or an antenna) in the ground operations control center, where the information is sent by a satellite platform to the ground operations control center; or the chip sends information to another module (for example, a radio frequency module or an antenna) in the ground operations control center, where the information is sent by the ground operations control center to a satellite platform.

When the communication apparatus is a chip used in a terminal, the chip implements a function of the terminal in the foregoing method embodiments. The chip receives information from another module (for example, a radio frequency module or an antenna) in the terminal, where the information is sent by a satellite base station to the terminal; or the chip sends information to another module (for example, a radio frequency module or an antenna) in the terminal, where the information is sent by the terminal to a satellite base station.

In addition, it should be noted that the transceiver unit and/or the processing unit may be implemented via a virtual module. For example, the processing unit may be implemented via a software functional unit or a virtual apparatus, and the transceiver unit may be implemented via a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is caused to perform the methods in the foregoing embodiments.

An embodiment of this application further provides a communication system, including the foregoing communication apparatus.

An embodiment of this application further provides a circuit. The circuit is coupled to a memory, and the circuit is configured to perform the methods shown in the foregoing embodiments. The circuit may include a chip circuit.

It should be noted that one or more of the foregoing units or units may be implemented by software, hardware, or a combination of software and hardware. When any one of the foregoing units or units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, a discrete hardware component, or all or some of circuits configured to implement a processing function in the foregoing devices, and may implement or perform the methods, steps, and logical block diagrams disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory via the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of instructions or a data structure and that can be accessed by a computer, but is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description. Any embodiment or design scheme described as an "example" or "for example" in embodiments of this application should not be construed as being more preferred or more advantageous than another embodiment or design scheme. Exactly, use of the word like "example" or "for example" is intended to present a related concept in a specific manner for ease of understanding.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A communication method, wherein the method comprises:
receiving a first message sent by a first device, wherein the first message comprises a first synchronization signal block (synchronization signal block, SSB) index set and a first parameter, the first SSB index set is a set of indexes of SSB beams covering earth beam positions corresponding to beam position indexes comprised in a first beam position index set, the first beam position index set is a set of indexes of earth beam positions within a coverage area of a current device, the first parameter is used to determine a first SSB index, and the first SSB index is an index of a beam of a to-be-measured SSB of a second device; and
sending a second message to a third device, wherein the second message comprises a second parameter, and the second parameter is used to determine the first SSB index.

2. A communication method, wherein the method comprises:
receiving a fifth message sent by a first device, wherein the fifth message comprises a second offset value, and the second offset value indicates an offset value of an SSB index of a current device;
determining a first synchronization signal block (synchronization signal block, SSB) index set based on the second offset value, wherein the first SSB index set is a set of indexes of SSB beams covering earth beam positions corresponding to beam position indexes comprised in a first beam position index set, and the first beam position index set is a set of indexes of earth beam positions within a coverage area of the current device; and
sending a second message to a third device, wherein the second message comprises a second parameter, the second parameter is used to determine a first SSB index, and the first SSB index is an index of a beam of a to-be-measured SSB of a second device.

3. A communication method, wherein the method comprises:
receiving a sixth message sent by a fourth device, wherein the sixth message comprises a second offset value, and the second offset value indicates an offset value of an SSB index of a fifth device;
determining a first synchronization signal block (synchronization signal block, SSB) index set based on the second offset value, wherein the first SSB index set is a set of indexes of SSB beams covering earth beam positions corresponding to beam position indexes comprised in a first beam position index set, and the first beam position index set is a set of indexes of earth beam positions within a coverage area of the fifth device; and
sending a first message to the fifth device, wherein the first message comprises the first SSB index set and a first parameter, the first parameter is used to determine a first SSB index, and the first SSB index is an index of a beam of a to-be-measured SSB of a second device.

4. A communication method, wherein the method comprises:
receiving a seventh message sent by a fourth device, wherein the seventh message comprises a first synchronization signal block (synchronization signal block, SSB) index set and a first parameter, the first SSB index set is a set of indexes of SSB beams covering earth beam positions corresponding to beam position indexes comprised in a first beam position index set, the first beam position index set is a set of indexes of earth beam positions within a coverage area of a fifth device, the first parameter is used to determine a first SSB index, and the first SSB index is an index of a beam of a to-be-measured SSB of a second device; and
sending a first message to the fifth device, wherein the first message comprises the first SSB index set and the first parameter.

5. A communication method, wherein the method comprises:
determining a second offset value and a third offset value, wherein the second offset value indicates an offset value of an SSB index of a fifth device, and the third offset value indicates an offset value of an SSB index of a second device;
determining a first synchronization signal block (synchronization signal block, SSB) index set based on the second offset value, wherein the first SSB index set is a set of indexes of SSB beams covering earth beam positions corresponding to beam position indexes comprised in a first beam position index set, and the first beam position index set is a set of indexes of earth beam positions within a coverage area of the fifth device; and
sending a seventh message to the first device, wherein the seventh message comprises the first SSB index set and a first parameter, the first parameter is used to determine a first SSB index, and the first SSB index is an index of a beam of a to-be-measured SSB of the second device.

6. A communication method, wherein the method comprises:
receiving a second message sent by a fifth device, wherein the second message comprises a second parameter, the second parameter is used to determine a first synchronization signal block (synchronization signal block, SSB) index, and the first SSB index is an index of a beam of a to-be-measured SSB of a second device; and
measuring the SSB corresponding to the first SSB index.

7. The method according to claim 1 or any one of claims 3 to 5, wherein
the first parameter comprises a first offset value or a second SSB index set, the first offset value indicates a difference between an SSB index corresponding to an SSB beam of the fifth device and an SSB index corresponding to an SSB beam of the second device that covers a same earth beam position as the SSB beam of the fifth device, the second SSB index set is a set of indexes of SSB beams covering earth beam positions corresponding to beam position indexes comprised in a second beam position index set, the second beam position index set comprises an index of an earth beam position that is adjacent to or overlaps with an earth beam position corresponding to a first beam position index and that is within a coverage area of the second device, and the first beam position index is an index of an edge earth beam position within the coverage area of the fifth device.

8. The method according to any one of claims 1, 2, or 6, wherein
the second parameter comprises a first offset value or a second SSB index set, the first offset value indicates a difference between an SSB index corresponding to an SSB beam of the fifth device and an SSB index corresponding to an SSB beam of the second device that covers a same earth beam position as the SSB beam of the fifth device, the second SSB index set is a set of indexes of SSB beams covering earth beam positions corresponding to beam position indexes comprised in a second beam position index set, the second beam position index set comprises an index of an earth beam position that is adjacent to or overlaps with an earth beam position corresponding to a first beam position index and that is within a coverage area of the second device, and the first beam position index is an index of an edge earth beam position within the coverage area of the fifth device.

9. A communication apparatus, comprising a processor, wherein the processor is coupled to a memory, the memory is configured to store instructions, and when the instructions are executed by the processor, the communication apparatus is caused to perform the method according to any one of claims 1 to 8.
